# EUROPEAN PATENT APPLICATION

(11) **EP 4 745 718 A1**
(43) Date of publication of application: **20.05.2026**
(21) Application number: 24845778.0
(22) Date of filing: 31.05.2024
(51) Int. Cl.: G06F 3/01, G06T 19/00, G06F 3/00, G06F 3/0484, G06F 1/16, G06F 3/04842, G06T 13/40

(54) **ELECTRONIC DEVICE, METHOD, AND COMPUTER-READABLE MEDIUM FOR DISPLAYING VIRTUAL OBJECT**

(30) Priority: 26.07.2023 KR 20230097863; 30.08.2023 KR 20230114997
(71) Applicant: Samsung Electronics Co., Ltd., Suwon-si, Gyeonggi-do 16677 (KR)
(72) Inventor: HWANG, Sunpil, Suwon-si, Gyeonggi-do 16677 (KR); KIM, Jooyoung, Suwon-si, Gyeonggi-do 16677 (KR); KIM, Sungoh, Suwon-si, Gyeonggi-do 16677 (KR); MIN, Kyungchel, Suwon-si, Gyeonggi-do 16677 (KR); PARK, Eunsol, Suwon-si, Gyeonggi-do 16677 (KR); YEOM, Donghyun, Suwon-si, Gyeonggi-do 16677 (KR); LEE, Gunhee, Suwon-si, Gyeonggi-do 16677 (KR); LEE, Sanghun, Suwon-si, Gyeonggi-do 16677 (KR)
(74) Representative: HGF
(86) International application number: PCT/KR2024/007524
(87) International publication number: WO 2025/023474

(57) **Abstract**

In embodiments, an electronic device is provided. The electronic device may comprise: a camera; a display; at least one sensor; a memory for storing instructions; and at least one processor. The instructions, when executed by the at least one processor, may cause the electronic device to: obtain an external image of the electronic device through the camera while displaying a virtual image of a virtual environment through the display; display, through the display, at least a part of the external image in a virtual area according to first depth information in the virtual environment, while displaying the virtual image; obtain a distance from an external object included in at least the part of the external image through the at least one sensor; and display a virtual object corresponding to the external object through the display while displaying the virtual image and at least the part of the external image, on the basis that a position corresponding to the distance from the external object is within a space according to second depth information.

## Description

### [Technical Field]

The present disclosure relates to an electronic device, a method, and a computer-readable medium for displaying a virtual object.

### [Background Art]

In order to provide an enhanced user experience, an electronic device that provides an augmented reality (AR) service that displays information generated by a computer in connection with an external object in the real-world is being developed. The electronic device may provide the augmented reality service to a user using a virtual object corresponding to the user.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise a camera, a display, at least one sensor, memory storing instructions, and at least one processor. The instructions, when executed by the at least one processor, may cause the electronic device to obtain, through the camera, an external image of the electronic device while displaying, through the display, a virtual image of a virtual environment, display, through the display, at least a portion of the external image on a virtual region according to first depth information in the virtual environment while displaying the virtual image, obtain, through the at least one sensor, a distance to an external object included in at least the portion of the external image, and display a virtual object corresponding to the external object through the display while displaying the virtual image and at least the portion of the external image, based on a position corresponding to the distance to the external object being within a space according to second depth information.

In embodiments, an electronic device is provided. The electronic device may comprise a camera, a display, at least one sensor, memory storing instructions, and at least one processor. The instructions, when executed by the at least one processor, may cause the electronic device to obtain, through the camera, an external image indicating at least a portion of a real environment around the electronic device while displaying, through the display, a virtual image of a virtual environment, display, through the display, the external image on a virtual region according to first depth information in the virtual environment while displaying the virtual image, obtain position information of the external object based on a distance to the external object obtained through the at least one sensor, display, through the display, a virtual object corresponding to the external object while displaying the virtual image and at least a portion of the external image, in a case that the position information of the external object is within a space according to second depth information, and cease displaying the virtual object, in a case that the position information of the external object is outside the space according to the second depth information and is located between the first depth information and the second depth information. The second depth information may indicate a distance that is closer to a reference position of the virtual environment than a distance corresponding to the first depth information.

In embodiments, a non-transitory computer-readable medium is provided. The non-transitory computer-readable medium may comprise memory storing instructions. The instructions, when executed by at least one processor, may cause an electronic device to obtain, through a camera, an external image of the electronic device while displaying, through a display, a virtual image of a virtual environment, display, through at least a portion of the display, the external image on a virtual region according to first depth information in the virtual environment while displaying the virtual image, obtain, through at least one sensor, a distance to an external object included in at least a portion of the external image, and display a virtual object corresponding to the external object through the display while displaying the virtual image and at least the portion of the external image, based on a position corresponding to the distance to the external object being within a space according to second depth information.

### [Description of the Drawings]

FIG. 1 illustrates an example of an operation of displaying an external image obtained through a camera on a virtual environment.
FIG. 2A illustrates an example of a perspective view of a wearable device.
FIG. 2B illustrates an example of one or more hardware disposed in a wearable device.
FIGS. 3A and 3B illustrate an example of an exterior of a wearable device.
FIG. 4 illustrates an example of a block diagram of a wearable device.
FIG. 5 illustrates an example of a pass-through operation of a wearable device.
FIG. 6 illustrates an example of depth information for a pass-through operation of a wearable device.
FIG. 7 illustrates an example of displaying a virtual object according to depth information.
FIG. 8 illustrates an example of displaying an external image and a virtual object.
FIG. 9 illustrates an example of displaying an external image and a virtual object according to movement of the virtual object.
FIG. 10 illustrates an example of displaying a virtual object according to movement of the virtual object.
FIGS. 11A and 11B illustrate examples of a pass-through surface.
FIG. 12 illustrates an operation flow of a wearable device for displaying a virtual object on an external image.
FIG. 13 illustrates an example of a boundary region for displaying a virtual object.
FIG. 14 illustrates an example of a boundary region and a virtual environment for displaying a virtual object.
FIG. 15 illustrates an example of a boundary region of a curved surface.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a space (e.g., a side, an object, a shape, a surface, a figure, a three-dimensional figure, a region, an occupied region, a position, a depth, or a distance), a term referring to a distance (e.g., a z-index, a z-order, a z-depth, a value on a z-axis, data, depth data, distance information, a distance value, a depth value, position information, or position data), a term referring to a pass-through surface (e.g., a pass-through region, a virtual surface, a pass-through surface, a field-of-view surface, a virtual region, a field-of-view region, a transition surface, a transition space, a transition region, a pass surface, or a pass region), a term referring to a value (e.g., a threshold value, a reference value, a reference region, a reference range, a level, a threshold, a range, a value, or a region), a term for a calculation state (e.g., a step, an operation, or a procedure), a term referring to network entities, a term referring to a component of a device, and the like used in the following descriptions are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

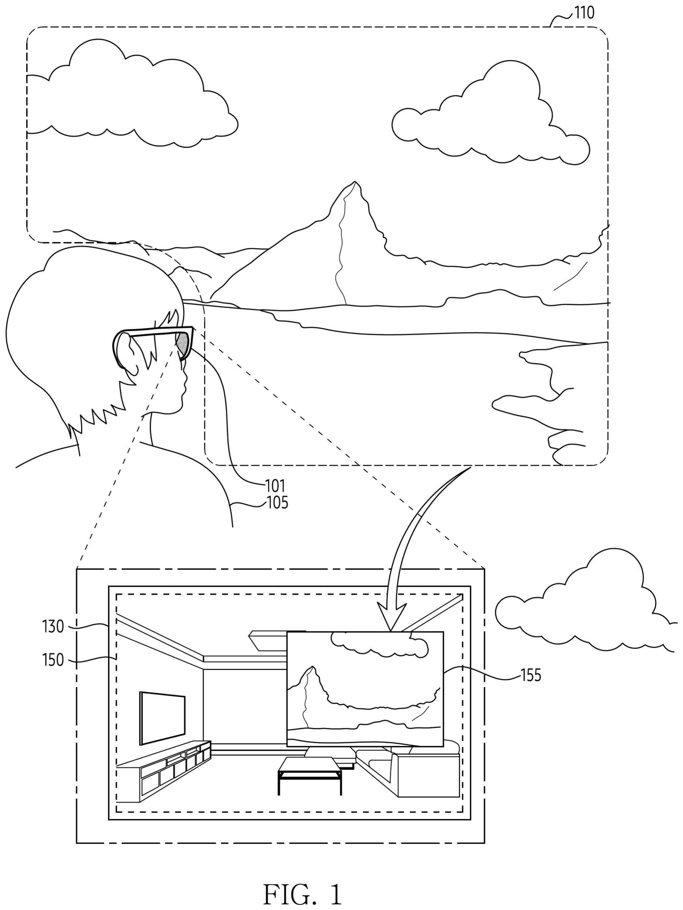

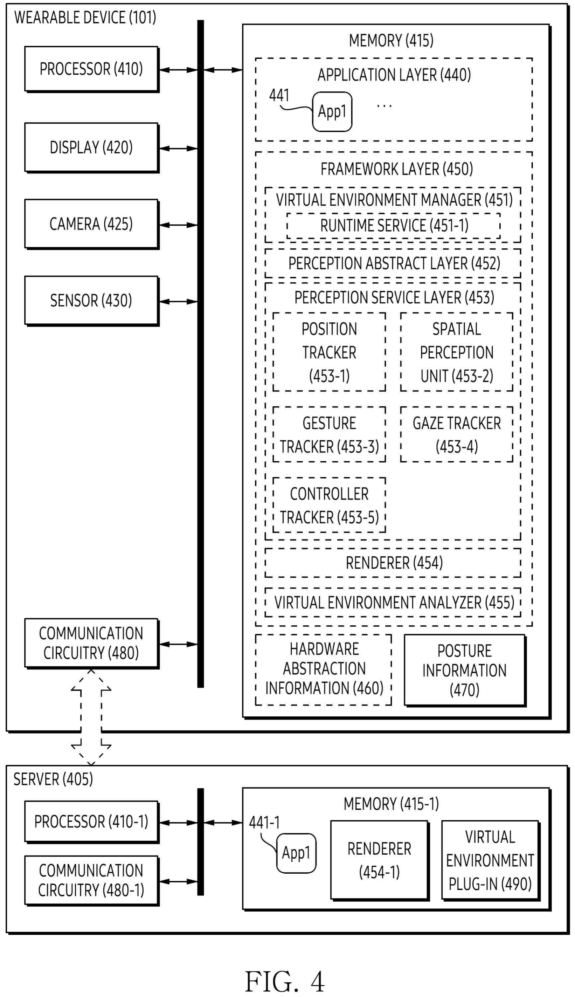

FIG. 1 illustrates an example of an operation of displaying an external image obtained through a camera on a virtual environment. A wearable device 101 of FIG. 1 may include a head-mounted display (HMD) wearable on a head of a user 105. The wearable device 101 may include a camera (e.g., a camera 425 of FIG. 4) disposed toward a front of the user 105 in a state of being worn by the user 105. The front of the user 105 may include a direction in which the head of the user 105 and/or a gaze of the user 105 face. The wearable device 101 may include a sensor for identifying a motion of the head of the user 105 and/or the wearable device 101 in a state of being worn by the user 105. The wearable device 101 may identify an angle of the wearable device 101 based on data of the sensor. In order to provide a user interface (UI) based on virtual reality (VR), augmented reality (AR), and/or mixed reality (MR) to the user 105 wearing the wearable device 101, the wearable device 101 may control the camera and/or the sensor. The UI may be related to a metaverse service and/or a notification service provided by the wearable device 101 and/or a server connected to the wearable device 101.

According to an embodiment, the wearable device 101 may execute a function related to augmented reality (AR) and/or mixed reality (MR). Referring to FIG. 1, in a state in which the user 105 wears the wearable device 101, the wearable device 101 may include at least one lens disposed adjacent to an eye of the user 105. Ambient light passing through the lens of the wearable device 101 may be combined (or mixed) with light emitted from a display (e.g., a display 420 of FIG. 4) of the wearable device 101. A display region of the display may be formed in at least a partial region of the lens through which the ambient light passes. Since the wearable device 101 at least partially displays an image generated based on at least a portion of the ambient light and the light emitted from the display together, the user 105 may view an image in which a real object recognized by the ambient light and a virtual object formed by the light emitted from the display are mixed.

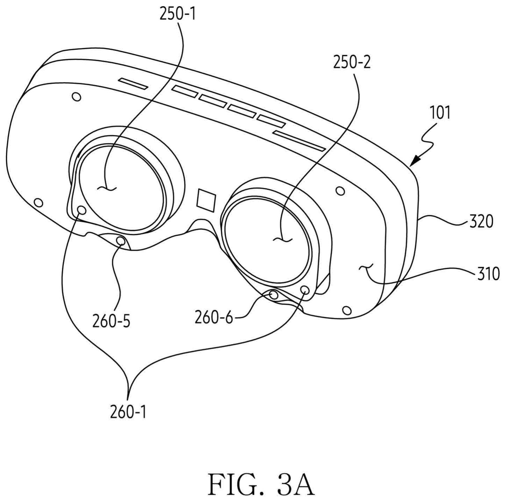

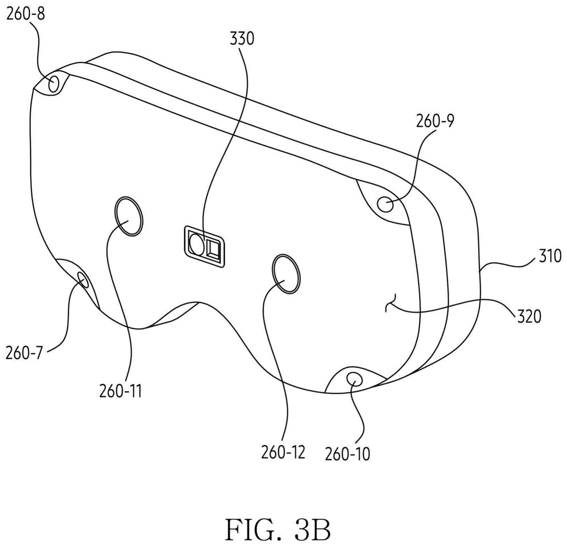

The wearable device 101 may execute a function related to video see-through (VST) and/or virtual reality (VR). For example, a VST function may include an operation of rendering a video to be represented as augmented reality above a video of a real background captured by a camera and showing a final result to the user. For example, the function related to VR may include eye tracking and/or hand tracking. In a state in which the user 105 wears the wearable device 101, the wearable device 101 may include a housing covering the eye of the user 105. In the state, the wearable device 101 may include a display disposed on a first surface (e.g., a first surface 310 of FIG. 3A) facing the eye. The wearable device 101 may include a camera (e.g., a camera 260-7, 260-8, 260-9, 260-10, 260-11, or 260-12 of FIG. 3B) disposed on a second surface (e.g., a second surface 320 of FIG. 3A) opposite the first surface. By using the camera, the wearable device 101 may obtain frame images including ambient light. The wearable device 101 may output the frame images to the display disposed on the first surface so that the user 105 recognizes the ambient light through the display. A display region of the display disposed on the first surface may be formed by one or more pixels included in the display. The wearable device 101 may synthesize the virtual object in the frame images output through the display so that the user 105 recognizes the virtual object together with the real object recognized by the ambient light.

According to an embodiment, the wearable device 101 may provide a user experience based on mixed reality (MR) by using a virtual environment (or a virtual space). The wearable device 101 may generate a virtual space mapped to an external space (e.g., a real space) by recognizing the external space including the wearable device 101. The wearable device 101 recognizing the external space may include an operation of obtaining information on a size of the external space (e.g., the size of the external space divided by a side wall, a floor surface, and/or a ceiling surface). The wearable device 101 recognizing the external space may include an operation of identifying an external plane (e.g., ceiling and/or floor) included in the external space. The operation of identifying the external space by the wearable device 101 may include an operation of identifying a virtual object (e.g., a user interface (UI) for displaying at least one image) displayed in the display.

According to an embodiment, the wearable device 101 may provide the user 105 with an external object (or an existence object) recognized by ambient light and a visual object (or a virtual object) displayed by the display. For example, the wearable device 101 may obtain an image 110 corresponding to the gaze of the user 105 obtained using the sensor. The image 110 may be obtained by using the camera of the wearable device 101. For example, the image 110 may correspond to a field-of-view (FoV) of the user 105 or the camera of the wearable device 101. The image 110 may be referred to as the external image 110 in terms of indicating at least a portion of a real environment around the wearable device identified through the camera. As an example, the image 110 may be referred to as a frame image in terms of corresponding to at least one of a plurality of frame images obtained through the camera.

According to an embodiment, the wearable device 101 may receive an input for obtaining the external image 110 while displaying a three-dimensional image 150 corresponding to the virtual environment (or the virtual space) through the display. The three-dimensional image 150 may be obtained based on execution of at least one software application installed in the wearable device 101.

According to an embodiment, the wearable device 101 may initiate driving the camera, based on receiving the input for obtaining the external image 110. The wearable device 101 may obtain, using the camera, the external image 110 corresponding to the gaze of the user 105. As an example, the external image 110 may be obtained based on color information among the color information or depth information. The wearable device 101 may store the external image 110 in a command buffer distinguished from a display buffer corresponding to the display in memory of the wearable device 101. The display buffer may store information on a screen 130 to be displayed on the display. For example, the display buffer may mean a region of the memory in which the information on the screen is at least temporarily stored to display the screen on the display. The wearable device 101 may display the screen 130 on the display by using the information on the screen 130 stored in the display buffer. For example, the screen 130 may mean a user interface (UI) displayed in at least a portion of the display. The wearable device 101 may display one or more visual objects (or one or more virtual objects) in the screen 130. The visual object may mean an object deployable in a screen for information transmission and/or interaction, such as text, an image, an icon, a video, a button, a checkbox, a radio button, a text box, a slider, and/or a table. The visual object may be referred to as a visual guide, a virtual object, a visual element, a UI element, a view object, and/or a view element.

According to an embodiment, the command buffer may be used for rendering a screen to be displayed on the display by the wearable device 101. The command buffer may correspond to each of images obtained by the wearable device 101 using each of one or more programs (e.g., a software application, a library, and/or a service) installed in the wearable device 101. The command buffer may store an image layer indicating an image used for rendering the screen to be displayed on the display. For example, the command buffer may mean a region of the memory in which the image layer is at least temporarily stored for rendering the screen.

The wearable device 101 may obtain the screen to be displayed on the display by rendering image layers corresponding to each of the obtained images. The screens to be obtained by the wearable device 101 based on an order of the image layers may vary.

The screen 130 provided by the wearable device 101 may include the three-dimensional image 150 and a virtual region 155. The wearable device 101 may display the virtual region 155 for providing the user 105 with at least a portion of the external image 110. The wearable device 101 may display the virtual region 155 while displaying the three-dimensional image 150. At least the portion of the external image 110 may be exposed through the virtual region 155. The user may recognize the real environment in addition to the virtual environment through the virtual region 155. For example, in order to display the virtual region 155 in the three-dimensional image 150, the wearable device 101 may obtain spatial information on the virtual environment corresponding to the three-dimensional image 150. The wearable device 101 may identify a position of the virtual region 155 in the virtual environment by using the spatial information. Based on the position of the virtual region 155, the wearable device 101 may display at least the portion of the external image 110 through the display (e.g., the display 420 of FIG. 4). The wearable device 101 may provide a user experience capable of performing interaction with an external environment, based on displaying at least the portion of the external image 110 on the virtual region 155.

The wearable device 101 may obtain, by performing rendering, the screen 130 stored in the display buffer and displayed through the display. The wearable device 101 may dispose an image layer corresponding to the external image 110 on an image layer corresponding to the virtual region 155, in order to display the external image 110 on at least a portion of the virtual region 155. The wearable device 101 may obtain the screen 130 by performing rendering so that the virtual region 155 and the external image 110 are displayed superimposed on the three-dimensional image 150. The screen 130 may include the external image 110, the virtual region 155, and the three-dimensional image 150 superimposed based on the order. The external image 110 may be referred to as a pass-through image in terms of a surrounding environment of the wearable device 101 being shown to the user 105 by passing through the three-dimensional image 150. The external image 110 may also be referred to as a punch-through image in terms of at least a portion of the external image 110 being shown to the user 105 by passing through at least a portion of the three-dimensional image 150. In addition, an operation of displaying the virtual region 155 and providing the user 105 with at least the portion of the external image 110 may be referred to as a pass-through operation or a punch-through operation. The virtual region 155 may be referred, in addition to the virtual region, to as a virtual surface, a punch-through region, a virtual surface, a punch-through surface, a pass-through region, a pass-through surface, a field-of-view surface, a field-of-view region, a transition surface, a transition space, a transition region, a pass surface, a pass region, or a term having a technical meaning equivalent thereto.

Although the one virtual region 155 is illustrated in FIG. 1, embodiments of the present disclosure are not limited thereto. For example, the screen 130 may include a plurality of virtual regions (not illustrated). Each virtual region of the plurality of virtual regions may display at least the portion of the external image 110.

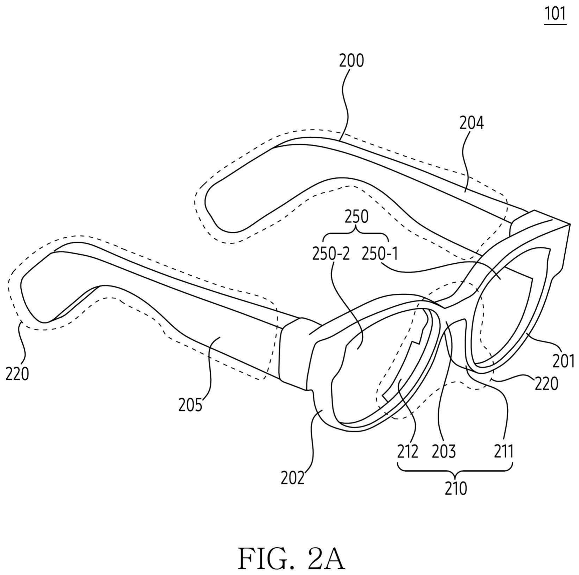

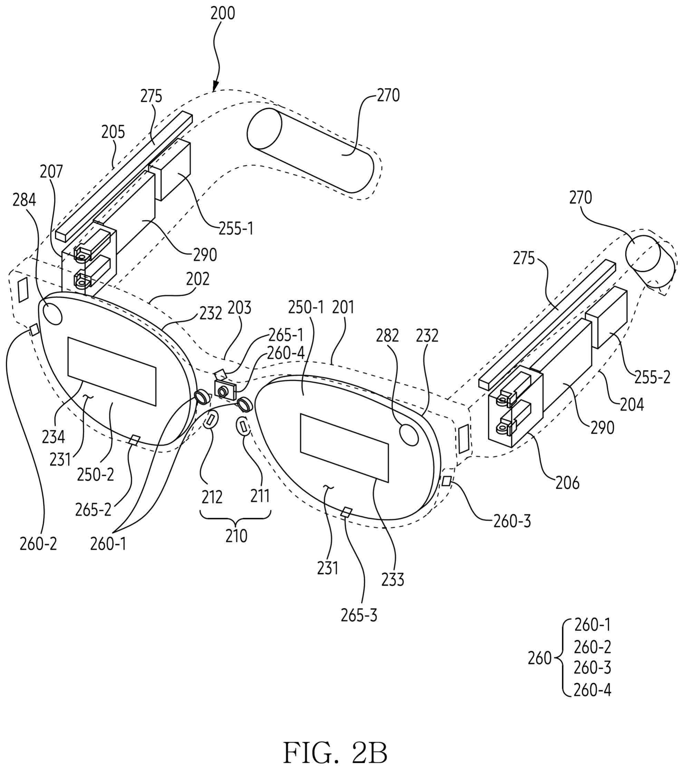

FIG. 2A illustrates an example of a perspective view of a wearable device. FIG. 2B illustrates an example of one or more hardware disposed in the wearable device. According to an embodiment, a wearable device 101 may have a form of glasses that is wearable on a body part (e.g., head) of a user. The wearable device 101 of FIGS. 2A to 2B may be an example of the wearable device 101 of FIG. 1. The wearable device 101 may include a head-mounted display (HMD). For example, a housing of the wearable device 101 may include a flexible material such as rubber and/or silicone having a form closely attached to a portion of the user's head (for example, a portion of a face surrounding two eyes). For example, the housing of the wearable device 101 may include one or more straps able to be twined around the user's head, and/or one or more temples attachable to ears of the head.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

The wearable device 101 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM)) using the multi-camera and/or time-of-flight (ToF). The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

According to an embodiment, the wearable device 101 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 206-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 101. For example, the wearable device 101 may detect the gaze from an image including the user's pupil obtained through the eye tracking camera 260-1. The wearable device 101 may identify an object (e.g., a real object, and/or a virtual object) focused by the user, by using the user's gaze obtained through the eye tracking camera 260-1. The wearable device 101 identifying the focused object may execute a function (e.g., gaze interaction) for interaction between the user and the focused object. The wearable device 101 may represent a portion corresponding to eye of an avatar indicating the user in the virtual space, by using the user's gaze obtained through the eye tracking camera 260-1. The wearable device 101 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 101 may obtain an image having the visual quality of the first area matching the user's gaze and the visual quality of the second area by using foveated rendering. For example, when the wearable device 101 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 101 may compensate for depth information (e.g., a distance between the wearable device 101 and an external object obtained through a depth sensor), by using an image obtained through the photographing camera 260-4. The wearable device 101 may perform object recognition through an image obtained using the photographing camera 260-4. The wearable device 101 may perform a function (e.g., auto focus) of focusing an object (or subject) within an image and/or an optical image stabilization (OIS) function (e.g., an anti-shaking function) by using the photographing camera 260-4. While displaying a screen representing a virtual space on the at least one display 250, the wearable device 101 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 101 is not limited to the above-described eye tracking camera 260-1 and the motion recognition camera 260-2 and 260-3. For example, the wearable device 101 may identify an external object included in the FoV by using a camera disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 201 and/or the second rim 202.

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4A) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

FIGS. 3A and 3B illustrate an example of an exterior of a wearable device (e.g., the wearable device 101). The wearable device 101 of FIGS. 3A and 3B may be an example of the wearable device 101 of FIG. 1. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include a camera 260-1 for photographing and/or tracking two eyes of the user adjacent to each of the first display 250-1 and the second display 250-2. The camera 260-1 may be referred to as the gaze tracking camera 260-1 of FIG. 2B. According to an embodiment, the wearable device 101 may include cameras 260-5 and 260-6 for photographing and/or recognizing the user's face. The cameras 260-5 and 260-6 may be referred to as a FT camera. The wearable device 101 may control an avatar representing a user in a virtual space, based on a motion of the user's face identified using the cameras 260-5 and 260-6. For example, the wearable device 101 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 101.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101. Although not illustrated, a microphone for obtaining sound outputted from the external object may be disposed on the second surface 320 of the wearable device 101. The number of microphones may be one or more according to embodiments.

Hereinafter, a hardware or software configuration of the wearable device 101 will be described later with reference to FIG. 4.

FIG. 4 illustrates an example of a block diagram of a wearable device (e.g., a wearable device 101). The wearable device 101 of FIG. 4 may be an example of the wearable device 101 of FIG. 1 and the wearable device 101 of FIGS. 2A to 3B.

Referring to FIG. 4, a wearable device 101 according to an embodiment may include at least one of a processor 410, memory 415, a display 420, a camera 425, a sensor 430, or communication circuitry 480. The processor 410, the memory 415, the display 420, the camera 425, the sensor 430, and the communication circuitry 480 may be electronically and/or operably coupled with each other by an electronical component such as a communication bus 402. A type and/or the number of hardware components included in the wearable device 101 is not limited to those illustrated in FIG. 4. For example, the wearable device 101 may include only some of the hardware components illustrated in FIG. 4. Elements (e.g., layers and/or modules) in the memory described below may be logically divided. However, it is not limited thereto.

The processor 410 of the wearable device 101 according to an embodiment may include a hardware component for processing data based on one or more instructions. The hardware component for processing data may include, for example, an arithmetic and logic unit (ALU), a field programmable gate array (FPGA), and/or a central processing unit (CPU). The number of processors 410 may be one or more. For example, the processor 410 may have a structure of a multi-core processor such as a dual core, a quad core, or a hexa core.

The memory 415 of the wearable device 101 according to an embodiment may include a hardware component for storing data and/or instructions inputted to and/or outputted from the processor 410. The memory 415 may include, for example, a volatile memory, such as a random-access memory (RAM), and/or a non-volatile memory, such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disc, and an embedded multi-media card (eMMC).

In an embodiment, the display 420 of the wearable device 101 may output visualized information to a user of the wearable device 101. For example, the display 420 may output visualized information to the user by being controlled by the processor 410 including circuitry such as a graphics processing unit (GPU). The display 420 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 425 of the wearable device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 425 may be disposed in a form of a 2 dimensional array. The camera 425 may generate two-dimensional frame data corresponding to light reaching the optical sensors of the two-dimensional array by obtaining electrical signals of each of the plurality of optical sensors substantially simultaneously. For example, photo data captured using the camera 425 may mean a two-dimensional frame data obtained from the camera 425. For example, video data captured using the camera 425 may mean a sequence of a plurality of two-dimensional frame data obtained from the camera 425 according to a frame rate. The camera 425 may further include a flash light, disposed toward a direction in which the camera 425 receives light, for outputting light toward the direction.

According to an embodiment, the wearable device 101 may include a plurality of cameras (not illustrated) disposed toward different directions as an example of the camera 425. Among the plurality of cameras, a first camera may be referred to as a motion recognition camera, and a second camera may be referred to as an eye tracking camera. The wearable device 100 may identify a position, a shape, and/or a gesture of a hand by using an image (e.g., the image 110 of FIG. 1) of the first camera. The wearable device 101 may identify a direction of a gaze of the user (e.g., the user 105 of FIG. 1) by using an image (not illustrated) of the second camera. As an example, a direction in which the first camera faces and a direction in which the second camera faces may be opposite to each other.

According to an embodiment, the sensor 430 of the wearable device 101 may generate electronic information that may be processed by the processor 410 and/or the memory 415 of the wearable device 101 from non-electronic information related to the wearable device 101. The information may be referred to as sensor data. The sensor 430 may include a global positioning system (GPS) sensor for detecting a geographic location of the wearable device 101, an image sensor, an illuminance sensor and/or a time-of-flight (ToF) sensor, and an inertial measurement unit (IMU) for detecting a physical motion of the wearable device 101.

In an embodiment, the communication circuitry 480 of the wearable device 101 may include a hardware component for supporting transmission and/or reception of an electrical signal between the wearable device 101 and an external electronic device (e.g., a server 405 of FIG. 4). The communication circuitry 480 may include, for example, at least one of a MODEM, an antenna, or an optic/electronic (O/E) converter. The communication circuitry 480 may support transmission and/or reception of an electrical signal based on various types of protocols, such as Ethernet, local area network (LAN), wide area network (WAN), wireless fidelity (WiFi), Bluetooth, bluetooth low energy (BLE), ZigBee, long term evolution (LTE), 5G new radio (NR), and/or 6G.

According to an embodiment, in the memory 415 of the wearable device 101, one or more instructions (or commands) indicating a calculation and/or an operation to be performed on data by the processor 410 of the wearable device 101 may be stored. A set of one or more instructions may be referred to as firmware, an operating system, a process, a routine, a sub-routine and/or an application. For example, the wearable device 101 and/or processor 410 may perform at least one of operations described below, when a set of a plurality of instructions distributed in a form of an operating system, firmware, a driver, and/or an application is executed. Hereinafter, an application being installed in the wearable device 101 may mean that one or more instructions provided in a form of an application are stored in the memory 415, and that the one or more applications are stored in a format (e.g., a file having an extension specified by an operating system of the wearable device 101) executable by the processor 410. As an example, an application may include a program and/or a library related to a service provided to the user.

Referring to FIG. 4, programs installed in the wearable device 101 may be classified into any one layer among different layers including an application layer 440, a framework layer 450, and/or a hardware abstraction layer (HAL) 460, based on a target. For example, in the hardware abstraction layer 460, programs (e.g., a module or a driver) designed to target hardware (e.g., the display 420, the camera 425, and/or the sensor 430) of the wearable device 101 may be classified. For example, FIG. 4 illustrates layers divided in the memory 415, but the layers may be logically divided. However, it is not limited thereto. According to an embodiment, the layers may be stored in a specified region in the memory 415.

For example, in the framework layer 450, programs (e.g., a position tracker 453-1, a spatial perception unit 453-2, a gesture tracker 453-3, a gaze tracker 453-4, a controller tracker 453-5, a virtual space analyzer 455, and/or a renderer 454) designed to target at least one of the hardware abstraction layer 460 and/or the application layer 440 may be classified. The programs classified as the framework layer 450 may provide an application programming interface (API) executable based on another program.

For example, in the application layer 440, a program designed to target the user (e.g., the user 105 of FIG. 1) controlling the wearable device 101 may be classified. As an example of the programs classified as the application layer 440, a first software application 441 is exemplified, but an embodiment is not limited thereto. For example, the programs (e.g., a software application) classified as the application layer 440 may cause execution of a function supported by the programs classified as the framework layer 450 by calling an API. For example, the wearable device 101 may display the screen 130 of FIG. 1 indicating a virtual environment on the display 420 based on execution of the first software application 441.

According to an embodiment, a virtual environment manager 451 may be configured for a virtual environment service. For example, the virtual environment manager 451 may include a platform (e.g., an Android platform) for supporting the virtual environment service. The virtual environment manager 451 may display, on the display, a posture of a virtual object indicating a posture of the user rendered using data obtained through the sensor 430. The virtual environment manager 451 may be referred to as a composition presentation manager.

For example, the virtual environment manager 451 may include a runtime service 451-1. As an example, the runtime service 451-1 may be referred to as an OpenXR runtime module. The runtime service 451-1 may be used to provide at least one of a user pose prediction function, a frame timing function, and/or a spatial input function through the wearable device 101. As an example, the runtime service 451-1 may be used to perform rendering for the virtual environment service to the user. For example, based on the runtime service 451-1, an application (e.g., unity or an OpenXR native application) may be implemented.

For example, the perception abstract layer 452 may be used for data exchange between the virtual environment manager 451 and a perception service layer 453. In terms of being used for the data exchange between the virtual environment manager 451 and the perception service layer 453, the perception abstract layer 452 may be referred to as an interface. As an example, the perception abstract layer 452 may be referred to as OpenPX. The perception abstract layer 452 may be used for a perception client and a perception service.

According to an embodiment, the perception service layer 453 may include one or more programs for processing data obtained from the sensor 430 (e.g., the camera 425). The one or more programs may include at least one of the position tracker 453-1, the spatial perception unit 453-2, the gesture tracker 453-3, the gaze tracker 453-4, and the controller tracker 453-5.

For example, the position tracker 453-1 may identify a posture of the wearable device 101 using at least one sensor of the wearable device 101. As an example, the position tracker 453-1 may identify a 6 degrees of freedom pose (6 dof pose) of the wearable device 101 based on data obtained using a camera (e.g., the camera 425 of FIG. 4) and the IMU. The position tracker 453-1 may be referred to as a head tracking (HeT) module.

For example, the spatial perception unit 453-2 may be used to configure a surrounding environment of the wearable device 101 (or the user of the wearable device 101) into a three-dimensional virtual space. The spatial perception unit 453-2 may be used to reconstruct the surrounding environment of the wearable device 101 in three dimensions based on data obtained using the camera (e.g., the camera 425 of FIG. 4). The spatial perception unit 453-2 may identify at least one of a plane, an inclination, and a step based on the surrounding environment of the wearable device 101 reconstructed in three dimensions. The spatial perception unit 453-2 may be referred to as a scene understanding (SU) module.

For example, the gesture tracker 453-3 may be used to identify (or perceive) a pose and/or a gesture of the hand of the user of the wearable device 101. As an example, the gesture tracker 453-3 may identify the pose and/or the gesture of the hand of the user based on data obtained from at least one sensor. As an example, the gesture tracker 453-3 may identify the pose and/or the gesture of the hand of the user based on data (or the image 110) obtained using a camera. The gesture tracker 453-3 may be referred to as a hand tracking (HaT) module.

For example, the gaze tracker 453-4 may be used for identifying (or tracking) movement of an eye of the user of the wearable device 101. As an example, the gaze tracker 453-4 may identify the movement of the eye of the user based on data obtained from at least one sensor. As an example, the gaze tracker 453-4 may identify the movement of the eye of the user based on data obtained using a camera (e.g., the gaze tracking camera 260-1 of FIGS. 2A and 2B) and/or an infrared light emitting diode (IR LED). The gaze tracker 453-4 may be referred to as an eye tracking (ET) module.

For example, the controller tracker 453-4 may be used for identifying (or tracking) movement of a controller connected to the wearable device 101. As an example, the controller tracker 453-4 may identify the movement of the controller based on receiving sensor data included in the controller through communication circuitry.

For example, in the perception service layer 453 of the wearable device 101, a face tracking module (not illustrated) for tracking a face of the user may be further included. For example, the face tracking module may be used for identifying (or tracking) movement of the face of the user and/or facial expression of the user. The face tracking module may estimate the facial expression of the user based on the movement of the face of the user. As an example, the face tracking module may identify the movement of the face of the user and/or the facial expression of the user based on data (e.g., an image) obtained using a camera.

For example, based on execution of the renderer 454, the wearable device 101 may render a screen including a virtual object representing a posture of the user in a virtual environment by obtaining data indicating the posture and/or movement of the user from one or more programs included in the perception service layer 453. Based on the execution of the renderer 454, the wearable device 101 may render one or more images (e.g., a virtual object animation) for changing a posture of the virtual object, by using posture information 470. The wearable device 101 may change a posture of entirety of the virtual object based on inverse kinematics, by identifying a posture of at least a portion of the user. In a case of changing a portion of the virtual object, the wearable device 101 may change the posture of entirety of the virtual object by inferring a position where another portion of the virtual object is to be changed based on position information in the virtual environment using the inverse kinematics.

For example, based on execution of the virtual environment analyzer 455, the wearable device 101 may identify virtual environment information. As an example, the virtual environment information may be received from the server 405 to the wearable device 101.

For example, the posture information 470 may include one or more images indicating the posture of the virtual object. As an example, the wearable device 101 may receive the posture information 470 from the server 405. By using the posture information 470, the wearable device 101 may control to change the posture of the virtual object displayed on the display, by identifying the posture of the virtual object corresponding to the posture of the user.

Referring to FIG. 4, the wearable device 101 and the server 405 may be connected to each other based on a wired network and/or a wireless network. The wired network may include a network such as the Internet, local area network (LAN), wide area network (WAN), Ethernet, or a combination thereof. The wireless network may include a network such as long term evolution (LTE), 5G new radio (NR), wireless fidelity (WiFi), Zigbee, near field communication (NFC), Bluetooth, bluetooth low-energy (BLE), or a combination thereof. Although the wearable device 101 and the server 405 are illustrated as being directly connected, the wearable device 101 and the server 405 may be indirectly connected through an intermediate node in a network. In terms of being located outside the wearable device 101, the server 405 may be referred to as an external electronic device.

Referring to FIG. 4, in an embodiment, the server 405 may include at least one of a processor 410-1, memory 415-1, or communication circuitry 480-1. In the server 405, the processor 410-1, the memory 415-1, and the communication circuitry 480-1 may be electronically and/or operably coupled through a communication bus. The processor 410-1, the memory 415-1, and the communication circuitry 480-1 included in the server 405 may include a hardware component and/or circuitry corresponding to the processor 410, the memory 415, and the communication circuitry 480 of the wearable device 101. Hereinafter, in order to reduce repetition, descriptions of hardware and/or software included in the server 405 may be omitted within a range superimposed with the electronic device 101.

The server 405 according to an embodiment may transmit, to the wearable device 101, the screen (e.g., the screen 130 of FIG. 1) indicating the virtual environment, by using a virtual environment plug-in 490. The server 405 may provide the wearable device 101 (or the user 105) with a virtual environment service by using the virtual environment plug-in 490. The server 405 may store, in the memory 415-1, a program including instructions for interaction with the wearable device 101. As an example of the program, a first software application 441-1 is exemplified, but an embodiment is not limited thereto.

For example, the server 405 may receive, from the wearable device 101, data (e.g., sensor data) obtained from one or more programs included in the perception service layer 453 of the wearable device 101. By using the received data, the server 405 may generate rendering data for changing the posture of the virtual object, by using a renderer 454-1. For example, the server 405 may generate rendering data for changing the posture of the virtual object to the wearable device 101, based on execution of the first software application 441-1. The server 405 may transmit the rendering data to the wearable device 101 in order to display, on the display 420 of the wearable device 101, a screen including the virtual object whose posture is changed using the rendering data. However, it is not limited thereto.

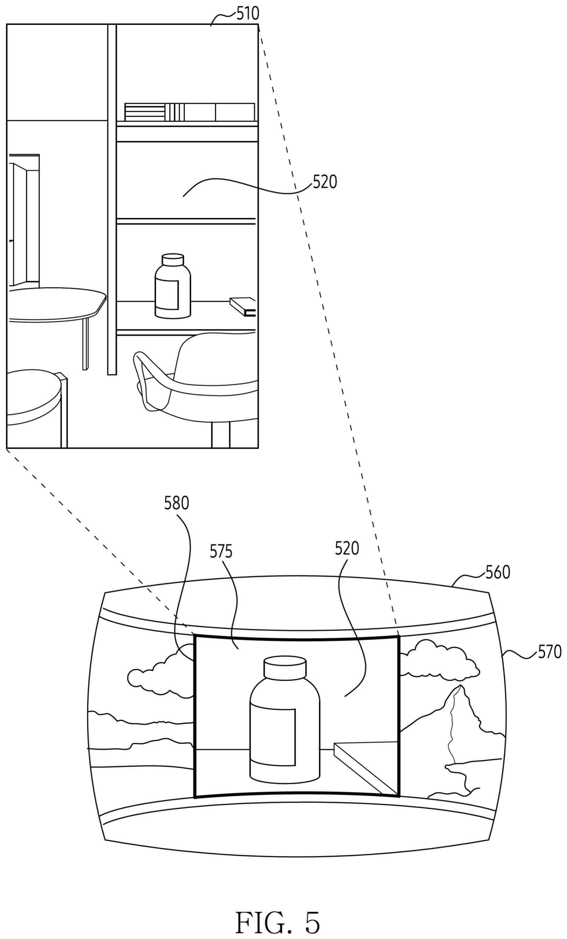

FIG. 5 illustrates an example of a pass-through operation of a wearable device (e.g., a wearable device 101). The wearable device 101 may provide a user 105 with a virtual environment. As a display (e.g., the display 420 of FIG. 4) of the wearable device 101 is disposed to be physically disconnected from the outside, the user 105 may obtain an immersive user experience based on the virtual environment. In addition, the wearable device 101 may obtain, through a camera (e.g., the camera 425 of FIG. 4), an image corresponding to a field-of-view (FoV) of the user 105. The pass-through operation may include an operation of displaying at least a portion of the image corresponding to the FOV while displaying a three-dimensional image of the virtual environment. By displaying at least the portion of the image through the display, the wearable device 101 may provide the user 105 with not only a VR experience but also an augmented-reality (AR) and/or a mixed reality (MR) experience. The pass-through operation may be used to increase productivity with respect to the wearable device 101. For example, through the pass-through operation, the user 105 of the wearable device 101 may recognize an input device (e.g., a keyboard or a mouse) from an image of a real environment in an office space configured as a virtual environment.

Referring to FIG. 5, the wearable device 101 may obtain an image 510 through a camera (e.g., the camera 425 of FIG. 4). The image 510 may indicate at least a portion of the real environment of the user 105 of the wearable device 101. The wearable device 101 may obtain the image 510 based on a gaze direction of the user 105. The wearable device 101 may obtain the image 510 corresponding to the FoV of the user 105. The image 510 may include an external object 520 (e.g., a hand of the user 105 of FIG. 1, a controller connected to the wearable device 101, or an object located in the FoV of the user) in the real environment.

The wearable device 101 may provide the user 105 with the virtual environment. The wearable device 101 may generate a virtual image 570 (e.g., a three-dimensional image) for the virtual environment. The wearable device 101 may display the virtual image 570 through the display (e.g., the display 420 of FIG. 4). The user 105 of the wearable device 101 may want to check at least a portion of the real environment in addition to the virtual environment. The wearable device 101 may perform the pass-through operation. For example, the wearable device 101 may drive the camera 425 based on a user input. The wearable device 101 may obtain the image 510 through the camera 425. The wearable device 101 may display, through the display 420, a screen 560 through the pass-through operation. The screen 560 may include the virtual image 570 indicating the virtual environment. The screen 560 may include a virtual region 580 for indicating at least a portion of the real environment. For example, the virtual region 580 may include at least a portion (e.g., an external image 575) of the image 510 obtained through the camera 425. The wearable device 101 may display the external image 575 in the virtual region 580. The external image 575 indicates at least the portion of the image 510. The external image 575 may include the external object 520.

The virtual region 580 for displaying the external image 575 exists at a specific position in the virtual environment. The wearable device 101 may display the virtual region 580 based on position information for the pass-through operation. The wearable device 101 may obtain the external image 575 from the image 510 based on position information of the virtual region 580. The image 510 may correspond to the FoV of the user 105. The external image 575 may include at least a partial region, among the image 510, corresponding to a direction in which the virtual region 580 is located. The wearable device 101 may display the virtual image 570 outside the virtual region 580 while displaying the external image 575 inside the virtual region 580.

In order to solve the above-described problem, the wearable device 101 according to embodiments of the present disclosure may display a virtual object corresponding to the external object 520 so that a sense of heterogeneity between the real environment and the virtual environment is less perceived due to the external object 520 while performing the pass-through operation. The wearable device 101 may display the virtual object while the virtual image 570 and the external image 575 are displayed.

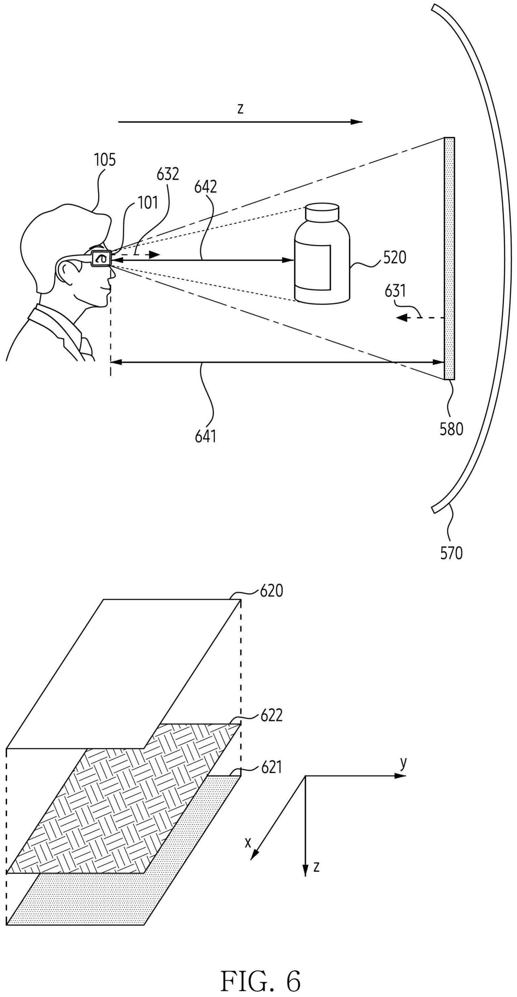

FIG. 6 illustrates an example of depth information for a pass-through operation of a wearable device (e.g., the wearable device 101 of FIG. 1). For a description of the pass-through operation of the wearable device 101, FIG. 5 may be referenced. The same reference numbers may indicate that the same description is applicable.

Referring to FIG. 6, the wearable device 101 may display a virtual image 570 indicating a virtual environment. Unlike a two-dimensional image corresponding to a plane (e.g., an xy plane), the virtual image 570 may include depth information (e.g., coordinate information on a z-axis) forming a space. The depth information may indicate a distance from a user 105 of the wearable device 101 to a rendering target for three-dimensional visualization. For example, in order to display a sense of perspective of a virtual object in the virtual environment, depth information on a surface of the virtual object and depth information on another surface of the virtual object may be different. Even if the same virtual object is rendered in the virtual environment, the user of the wearable device 101 may recognize that the virtual object occupies a specified space in the virtual environment due to the different depth information.

According to an embodiment, the wearable device 101 may use image layers having different depth information in order to represent a target (e.g., an object or an image) for rendering to perceive a sense of distance in a virtual space. Due to different depth information, the sense of perspective may be represented in the three-dimensional visualization. The wearable device 101 may generate the image layers based on a position of the user 105. For example, a reference layer 620 may be defined according to the user 105. Based on the position of the user 105, the wearable device 101 may generate a plurality of image layers. Each of the plurality of image layers may have depth information based on the user 105. The plurality of image layers may be aligned and stacked for rendering. As an example, an image layer corresponding to a position where a field-of-view of the user 105 starts in the virtual space may be the reference layer 620. As an example, depth information (e.g., a z-axis value) of the reference layer 620 may be '0'. The wearable device 101 may generate an image layer (e.g., a first image layer 621) corresponding to the virtual image 570 to render the virtual image 570. Since the virtual image 570 is positioned a certain distance (e.g., approximately 100m) or more away from the user 105 in the virtual space, it may have depth information corresponding to the certain distance. As an example, depth information of the image layer (e.g., the first image layer 621) corresponding to the virtual image 570 may be '100'.

According to an embodiment, the wearable device 101 may generate, through the pass-through operation, a virtual region 580 in the virtual environment. The pass-through operation may include an operation of displaying at least a portion of an image (e.g., an external image 575) corresponding to the FOV while displaying the virtual image 570 of the virtual environment. While displaying the virtual image 570, the wearable device 101 may display, through the virtual region 580, at least a portion (e.g., the external image 575 of FIG. 5) of a real environment. The wearable device 101 may obtain the external image 575 for the pass-through operation. For example, the wearable device 101 may obtain an image (e.g., the image 510 of FIG. 5) corresponding to a FoV through a camera (e.g., the camera 425 of FIG. 4). According to an embodiment, the wearable device 101 may obtain the external image 575 from the image 510 based on position information of the virtual region 580. For example, the wearable device 101 may obtain a region, among the image 510, according to a direction in which the virtual region 580 is located on the virtual space, as the external image 575. In addition to the camera 425, the wearable device 101 may obtain an external image by another method. For example, the wearable device 101 may download information on an external image from an external server. In addition, for example, the wearable device 101 may obtain an image through another camera provided separately from the wearable device 101. The virtual region 580 may have various shapes. For example, the virtual region 580 may include a curved surface or a plane including a surface in a three-dimensional space. The wearable device 101 may associate the external image 575 with an image layer (e.g., a second image layer 622) corresponding to depth information (hereinafter, first depth information 641) of the virtual region 580. The wearable device 101 may display the external image 575 by rendering the second image layer 622. Since the virtual image 570 is positioned a certain distance (e.g., approximately 70m) or more away from the user 105 in the virtual space, it may have depth information corresponding to the certain distance. As an example, the first depth information 641 of the image layer (e.g., the second image layer 622) corresponding to the external image 575 may be '70'. The first depth information 641, which is a distance in the virtual space, may indicate approximately 70 m.

According to an embodiment, the external image 575 may include an external object 520. The external object 520 may be located in a FoV. A distance perceived by the user 105 in the virtual environment may vary according to a rendered image layer (e.g., the first image layer 621 of the virtual image 570 or the second image layer 622). For example, the first depth information 641 of the virtual region 580 may indicate approximately 3 meters (m) in the virtual environment. The wearable device 101 may display the external object 520 of the external image 575 together with the virtual image 570 indicating the virtual environment and the virtual region 580. Since the virtual region 580 is rendered in the virtual environment according to the first depth information 641, the external image 575 in the virtual region 580 may also be displayed based on the first depth information 641. In the real environment, a distance 642 between the wearable device 101 and the external object 520 may be approximately 30 cm. Since a distance from a reference position to the virtual region 580 is approximately 30m, the user 105 of the wearable device 101 may recognize that the external object 520 on the external image 575 is separated by a distance of 30m or more. If a difference between the distance to the virtual region 580 (e.g., the distance indicated by the first depth information 641) and the distance 642 of the external object 520) (e.g., a real distance between the user 105 and the real external object 520) is large (e.g., the difference is equal to or greater than a distance threshold), the user 105 may perceive a sense of heterogeneity between the virtual environment and the real environment.

In order to alleviate the above-described problem, the wearable device 101 according to embodiments of the present disclosure may display, in the virtual environment, a virtual object corresponding to the external object 520 based on a real distance (e.g., the distance 642) between the external object 520 and the wearable device 101. The wearable device 101 may display the virtual object corresponding to the external object 520 in order to provide the user 105 with a virtual environment close to the real environment according to the distance between the external object 520 and the wearable device 101. The wearable device 101 may display the virtual object corresponding to the external object 520 so as to be superimposed on a region in which the external object 520 is displayed in a screen.

In order to determine whether to display the virtual object, the wearable device 101 may identify whether a specified condition is satisfied. According to an embodiment, the wearable device 101 may identify whether a distance from the wearable device 101 to an external object (e.g., the external object 520 of FIG. 5) is less than a threshold. For example, the threshold may be set to be less than a distance indicated by depth information (e.g., the first depth information 641) of a virtual region (e.g., the virtual region 580 of FIG. 5) to display an external image (e.g., the external image 575 of FIG. 5). In a case that the distance from the wearable device 101 to the external object 520 is less than the threshold, the wearable device 101 may display the virtual object. Generally, a virtual environment may provide a wider space than a real environment. As the external object 520 is closer to the user 105 in the real environment, distortion between a distance recognized in the external image 575 of the virtual environment and the real distance may occur. In order to alleviate influence due to the distortion, a virtual object may be displayed.

According to an embodiment, the wearable device 101 may identify whether a difference between a position of the virtual object and a position of a virtual region (e.g., the virtual region 580 of FIG. 5) for displaying an external image (e.g., the external image 575 of FIG. 5) is equal to or greater than a threshold. For example, the wearable device 101 may identify whether a difference between the real distance 642 from the wearable device 101 to the virtual object and the distance (hereinafter, a virtual distance) to the virtual region 580 is equal to or greater than the threshold. The wearable device 101 may display the virtual object in a case that a difference between a real distance from the wearable device 101 to the external object and a virtual distance between the virtual region 580 and the wearable device 101 is equal to or greater than the threshold. This is because distortion may occur in distance recognition of the user 105 as a difference between a position of the external object 520 and a position of the virtual region 580 becomes larger in the real environment. In order to alleviate influence due to the distortion, a virtual object may be displayed.

According to an embodiment, the wearable device 101 may identify whether an angle formed by a normal vector 631 of the virtual region 580 with a viewing direction 632 of the user 105 is equal to or greater than a threshold. For example, the wearable device 101 may display the virtual object in a case that the angle between the viewing direction 632 and the normal vector 631 is within the threshold. As the virtual region 580 (a pass-through surface) is located in front of the field-of-view of the user 105, a display ratio in the image (e.g., the image 510 of FIG. 5) corresponding to the FoV may increase. As a ratio of the image (e.g., the image 575 of FIG. 5) displayed through the virtual region 580 increases, distortion may occur in the distance recognition of the user 105. In order to alleviate influence due to the distortion, a virtual object may be displayed.

According to an embodiment, the wearable device 101 may identify whether an area of the virtual region 580 is equal to or greater than a threshold. For example, the wearable device 101 may display a virtual object in a case that the area of the virtual region 580 is equal to or greater than the threshold. As the virtual region 580 (i.e., the pass-through surface) is wider, a ration of an image (e.g., the image 575) displayed in a screen increases. Accordingly, distortion may occur in the distance recognition of the user 105, and thus a virtual object may be displayed in order to alleviate the influence due to the distortion.

The wearable device 101 may determine whether to display a virtual object based on at least one of the above-described conditions. According to an embodiment, through a combination of the above-described conditions, the wearable device 101 may determine whether to display the virtual object. For example, in a case that the angle formed by the normal vector 631 of the virtual region 580 with the viewing direction 632 of the user 105 is less than a first threshold, and the distance from the wearable device 101 to the external object (e.g., the external object 520 of FIG. 5) is less than a second threshold, the wearable device 101 may display a virtual object. For example, in a case that the distance from the wearable device 101 to the external object (e.g., the external object 520 of FIG. 5) is less than the second threshold, and the area of the virtual region 580 is equal to or greater than a third threshold, the wearable device 101 may display a virtual object. In addition, embodiments of the present disclosure are not to be interpreted as being limited to the above-described conditions. If it is a condition for determining whether distortion of the distance recognition of the user 105 has occurred, it may be used to determine whether to display a virtual object. The above condition may be used instead of the above-described conditions, or may be combined with at least one of the above-described conditions.

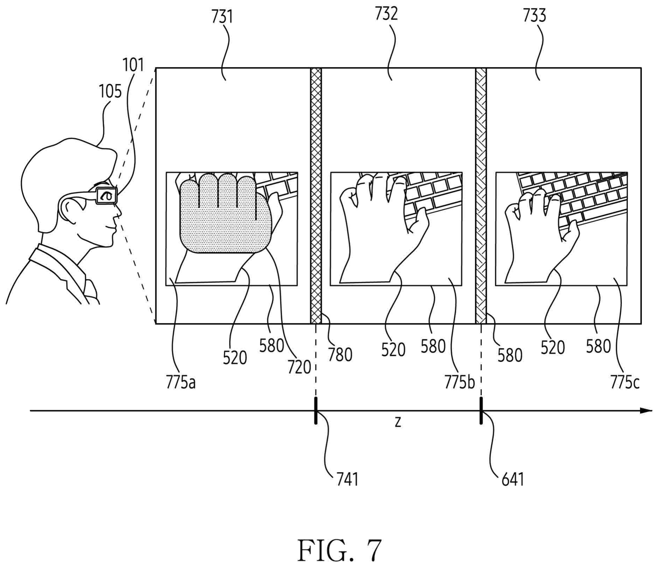

FIG. 7 illustrates an example of displaying a virtual object according to depth information. The depth information indicates a distance according to a direction (e.g., a z-axis direction). A method of displaying an external object (e.g., the external object 520 of FIG. 5) in a virtual space may include, through a virtual region (e.g., the virtual region 580 of FIG. 5), a method of displaying an external object 520 captured according to a pass-through operation or a method of displaying a virtual object 720 corresponding to the external object 520. In FIG. 7, an example of displaying a virtual object corresponding to the external object 520 or displaying an external image (e.g., the external image 575 of FIG. 5) without displaying the virtual object is described according to a position of the external object 520.

Referring to FIG. 7, a wearable device 101 may obtain a distance from a user 105 of the wearable device 101 to the external object 520. The wearable device 101 may obtain the distance between the wearable device 101 and the external object 520 through at least one sensor (e.g., a distance sensor, a depth sensor, an image sensor, and/or a time of flight (ToF) camera). According to an embodiment, the wearable device 101 may determine whether to display the virtual object corresponding to the external object 520 based on the distance between the wearable device 101 and the external object 520.

According to an embodiment, the wearable device 101 may identify whether the distance from the wearable device 101 to the external object 520 is less than a threshold 741. The threshold 741 may be referred to as second depth information. The threshold 741 may be set to be smaller than a distance indicated by depth information (e.g., the first depth information 641 of FIG. 6) of a virtual region (e.g., the virtual region 580 of FIG. 5) for displaying an external image (e.g., the external image 575 of FIG. 5). In order to describe a relationship between the display of the virtual object and the distance between the wearable device 101 and the external object 520, a region on a virtual space according to the threshold 741 may be referred to as a boundary region 780.

According to an embodiment, the distance between the wearable device 101 and the external object 520 may be less than the threshold 741. Hereinafter, a region in which a real distance from the wearable device 101 is less than the threshold may be referred to as a first region 731. In a case that the position of the external object 520 is in the first region 731, the wearable device 101 may display the virtual object 720. The wearable device 101 may obtain an external image 775a through a camera (e.g., the camera 420 of FIG. 4). While displaying the external image 775a on the virtual region 580, the wearable device 101 may display the virtual region 580 to be at least partially superimposed on the external image 775a.

According to an embodiment, the distance between the wearable device 101 and the external object 520 may be equal to or greater than the threshold 741, but may be shorter than a distance according to first depth information (e.g., the first depth information 641 of FIG. 6) of the virtual region 580. Hereinafter, a region in which the real distance from the wearable device 101 and the distance to the external object 520 are equal to or greater than the threshold 741 and less than a virtual distance corresponding to the first depth information 641 may be referred to as a second region 732. The wearable device 101 may obtain an external image 775b through the camera 420. In a case that the position of the external object 520 is in the second region 732, the wearable device 101 may display, through the virtual region 580, the external image 775b instead of displaying the virtual object 720.

According to an embodiment, the distance between the wearable device 101 and the external object 520 may be longer than the distance according to the first depth information (e.g., the first depth information 641 of FIG. 6) of the virtual region 580. Hereinafter, a region in which the real distance from the wearable device 101 is equal to or greater than the virtual distance corresponding to the first depth information 641 may be referred to as a third region 733. The wearable device 101 may obtain an external image 775c through the camera 420. In a case that the position of the external object 520 is in the third region 733, the wearable device 101 may display, through the virtual region 580, the external image 775c instead of displaying the virtual object 720. Even if the real distance from the wearable device 101 is closer or farther than the virtual region 580, the wearable device 101 may directly display the external object 520 instead of the virtual object 720, with only a difference in a sense of perspective. This is because the virtual object 720 is located at a distance farther than the virtual region 580 for the pass-through operation, so a possibility that a sense of perspective reduced due to the external object 520 is somewhat low.

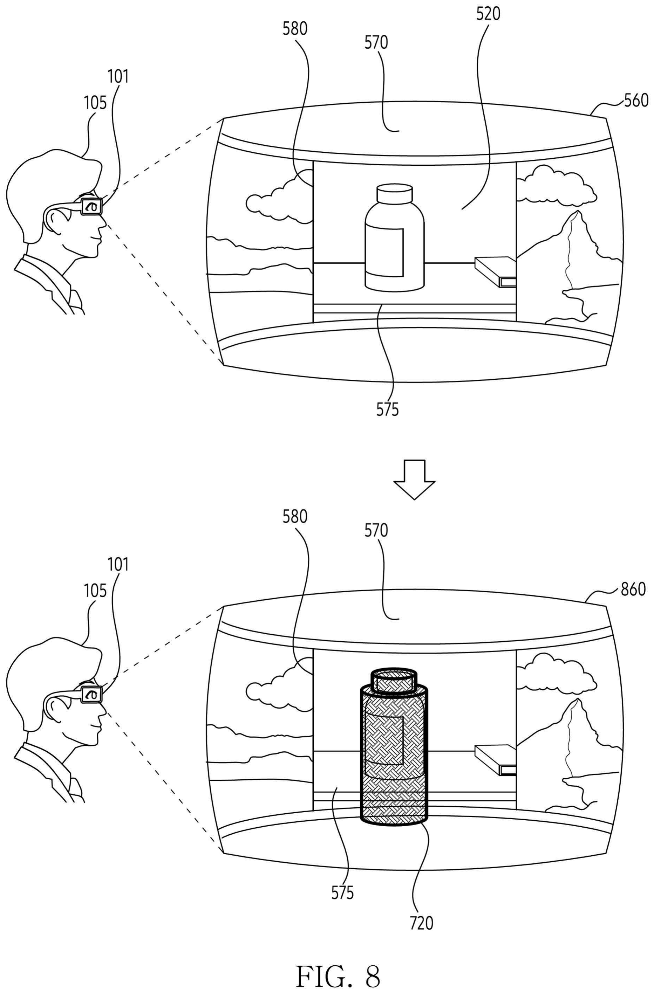

FIG. 8 illustrates an example of displaying an external image (e.g., the external image 575 of FIG. 5) and a virtual object (e.g., the virtual object 720 of FIG. 7).

Referring to FIG. 8, a wearable device 101 may provide a user 105 with a virtual environment. The wearable device 101 may generate a virtual image 570 for the virtual environment. The wearable device 101 may display the virtual image 570 through a display (e.g., the display 420 of FIG. 4). The wearable device 101 may perform a pass-through operation. For example, the wearable device 101 may drive the camera 425 based on a user input. The wearable device 101 may obtain an image (e.g., the image 510 of FIG. 5) through the camera 425. The wearable device 101 may display, through the display 420, a screen 560 through the pass-through operation. The screen 560 may include the virtual image 570 indicating the virtual environment. The screen 560 may include a virtual region 580 for indicating at least a portion of a real environment. For example, the virtual region 580 may include at least a portion (e.g., the external image 575 of FIG. 5) of the image 510 obtained through the camera 425. The virtual region 580 indicates a space in which a real image captured by the camera 425 is displayed on the virtual image 570 corresponding to the virtual space through a VST function. The wearable device 101 may display the external image 575 in the virtual region 580. The external image 575 indicates at least the portion of the image 510. The external image 575 may include the external object 520.

According to an embodiment, the wearable device 101 may identify whether a distance from the wearable device 101 to the external object 520 is less than a threshold (e.g., the threshold 741 of FIG. 7). For example, in a case that the distance between the wearable device 101 and the external object 520 is less than the threshold 741, the wearable device 101 may display the virtual object 720. For example, the wearable device 101 may display, through the display 420, a screen 860 through the pass-through operation. The screen 860 may include the virtual image 570 indicating the virtual environment, and the virtual object 720 displayed superimposed on at least a partial region of the virtual region 580. The wearable device 101 may display the virtual object 720 while displaying the virtual image 570 and the external image 575. The wearable device 101 may display the virtual object 720 while displaying the external image 575 in the virtual region 580. The wearable device 101 may display the virtual object 720 based on a direction in which the virtual region 580 for the external image 575 is located. The virtual object 720 may be at least partially superimposed on the external image 575. The wearable device 101 may display the virtual object 720 to be at least partially superimposed on a portion in which the external object 520 in the external image 575 is displayed.

In FIG. 8, as a condition for displaying the virtual object 720, a condition in which the distance between the external object 520 and the wearable device 101 is less than the threshold 741 has been described as an example, but embodiments of the present disclosure are not limited thereto. According to an embodiment, the wearable device 101 may display the virtual object 720 based on a condition in which a difference between a position of the external object 520 and a position of a boundary surface (e.g., the virtual region 580 of FIG. 5) for the pass-through operation is equal to or greater than a threshold. According to an embodiment, the wearable device 101 may display the virtual object 720 based on a condition in which the distance between the external object 520 and the wearable device 101 is less than the threshold 741, and an area of the virtual region 580 is equal to or greater than a size threshold. According to an embodiment, the wearable device 101 may display the virtual object 720 based on a condition in which the distance between the external object 520 and the wearable device 101 is less than the threshold 741, and depth information (e.g., the first depth information 641 of FIG. 6) of the virtual region 580 is equal to or greater than a distance threshold.

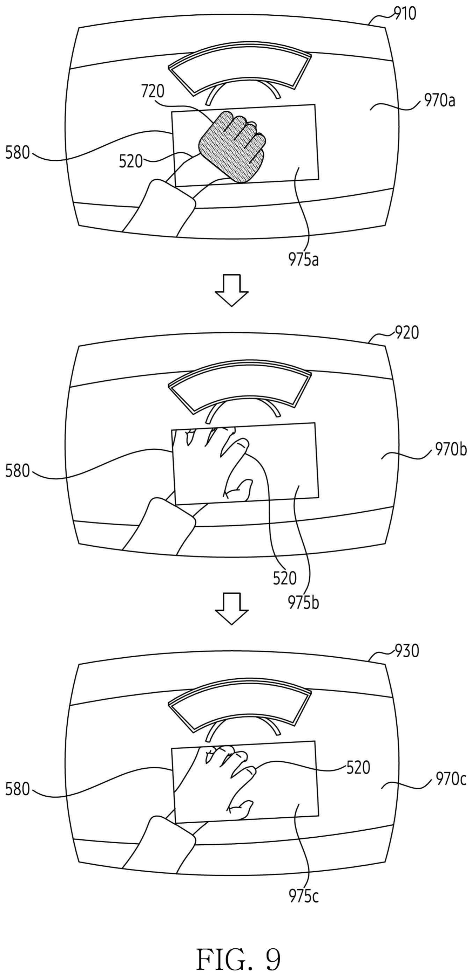

FIG. 9 illustrates an example of displaying an external image (e.g., the external image 575 of FIG. 5) and a virtual object (e.g., the virtual object 720 of FIG. 7) according to movement of the virtual object. The virtual object 720 may move. For example, the virtual object 720 may be a part (e.g., a hand) of a body of a user 105 of a wearable device 101 or a controller connected to the wearable device 101.

In FIG. 9, the wearable device 101 may display a screen 910 through a display (e.g., the display 420 of FIG. 4). The screen 910 may include a virtual image 970a and a virtual region 580. The virtual region 580 may display an external image 975a captured according to a pass-through operation of the wearable device 101. The external image 975a may include an external object 520. For example, the external object 520 may include the hand of the user 105. The wearable device 101 may obtain a distance between the wearable device 101 and the external object 520. For example, the user 105 may move the hand close to a head of the user 105 wearing the wearable device 101. As the hand moves, the external object 520 may become closer to the wearable device 101. The distance between the wearable device 101 and the external object 520 may be less than a specified threshold (e.g., the threshold 741 of FIG. 7). In order to indicate the external object 520 that has become closer, the wearable device 101 may display the virtual object 720 corresponding to the external object 520 on a virtual environment. The screen 910 may include the virtual object 720. The wearable device 101 may display the virtual object 720 while displaying the virtual image 970a and an external image 975b.

According to an embodiment, a screen 920 may include a virtual image 970b and the virtual region 580. The virtual region 580 may display the external image 975b captured according to the pass-through operation of the wearable device 101. The external image 975b may include the external object 520. For example, the external object 520 may include the hand of the user 105. The wearable device 101 may obtain the distance between the wearable device 101 and the external object 520. For example, the user 105 may move the hand close to a keyboard on a desk. As the hand moves, the external object 520 may become farther away from the wearable device 101. The distance between the wearable device 101 and the external object 520 may be equal to or greater than the specified threshold. Since it is sufficient to display, through the virtual region 580, the external object 520 that has become farther, the wearable device 101 may cease displaying the virtual object 720. At this time, the screen 920 may not include the virtual object 720. The wearable device 101 may display the virtual image 970b and the external image 975b without the virtual object 720.

According to an embodiment, a screen 930 may include a virtual image 970c and the virtual region 580. The virtual region 580 may display an external image 975c captured according to the pass-through operation of the wearable device 101. The external image 975c may include the external object 520. For example, the external object 520 may include the hand of the user 105. The wearable device 101 may obtain the distance between the wearable device 101 and the external object 520. For example, the user 105 may move the hand closer to the user 105 than to the keyboard. As the hand moves, the external object 520 may become closer to the wearable device 101. However, the distance between the wearable device 101 and the external object 520 may be equal to or greater than the specified threshold. Even if it becomes closer to the user 105, unless it becomes closer within the specified threshold, the wearable device 101 does not need to display the virtual object 720. The wearable device 101 may continuously display the virtual image 970a and the external image 975b. The screen 930 may not include the virtual object 720. The wearable device 101 may display the virtual image 970c and the external image 975c without the virtual object 720.

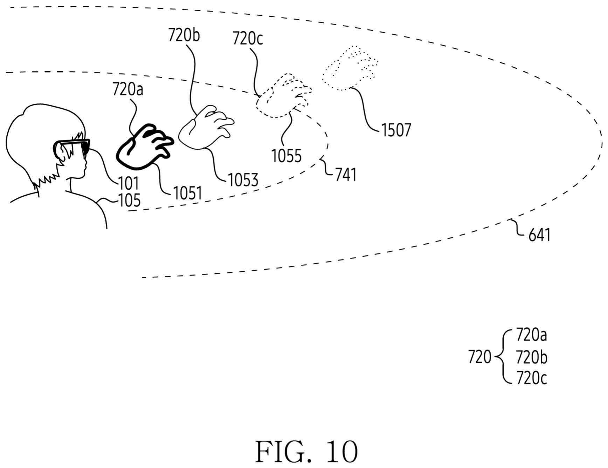

FIG. 10 illustrates an example of displaying a virtual object (e.g., the virtual object 720 of FIG. 7) according to movement of the virtual object. A wearable device 101 may display the virtual object 720 differently based on a distance between the virtual object 720 and a user 105.

Referring to FIG. 10, the wearable device 101 may display the virtual object 720 corresponding to an external object 520 based on a distance between the wearable device 101 and the external object 520. A situation in which the external object 520 gradually becomes farther from the user 105 is described.

For example, the external object 520 may be located at a first position 1051. Since the distance between the wearable device 101 and the external object 520 is less than a threshold 741, the wearable device 101 may display a virtual object 720a corresponding to the external object 520.

For example, the external object 520 may be located at a second position 1053. Since the distance between the wearable device 101 and the external object 520 is less than the threshold 741, the wearable device 101 may display a virtual object 720b corresponding to the external object 520. According to an embodiment, as the second position 1053 of the external object 520 becomes farther than the first position 1051 of the external object 520, the wearable device 101 may display the virtual object 720b differently from the virtual object 720a of the first position 1051. For example, the wearable device 101 may display the virtual object 720b to have a different attribute from an attribute (e.g., a color, a transparency, an opacity, a resolution, or a saturation) of the virtual object 720a. As an example, an opacity of the virtual object 720b may be lower than an opacity of the virtual object 720a. As an example, a resolution of the virtual object 720b may be lower than a resolution of the virtual object 720a. As an example, a size of the virtual object 720b may be smaller than a size of the virtual object 720a. As an example, a saturation of the virtual object 720b may be lower than a saturation of the virtual object 720a.

For example, the external object 520 may be located at a third position 1055. A portion of the external object 520 may have a distance to the wearable device 101 less than the threshold 741, and another portion of the external object 520 may have a distance to the wearable device 101 equal to or greater than the threshold 741. According to an embodiment, the external object 520 may display a virtual object 720c. For example, if at least a portion of the external object 520 has the distance to the wearable device 101 less than the threshold 741, the wearable device 101 may display the virtual object 720c corresponding to the entire external object 520. For another example, if the portion of the external object 520 has the distance to the wearable device 101 less than the threshold 741, the wearable device 101 may display the virtual object 720c corresponding to a region in which the distance to the wearable device 101 is less than the threshold 741. For still another example, if the portion of the external object 520 has the distance to the wearable device 101 less than the threshold 741, the wearable device 101 may display the virtual object 720c with a different display attribute in order to indicate that only a portion of the external object 520 is superimposed. As an example, an opacity of the virtual object 720c may be lower than an opacity of the virtual object 720b. As an example, a resolution of the virtual object 720c may be lower than a resolution of the virtual object 720b. As an example, a size of the virtual object 720c may be smaller than a size of the virtual object 720b. As an example, a saturation of the virtual object 720c may be lower than a saturation of the virtual object 720b.

For example, the external object 520 may be located at a fourth position 1057. Since the distance between the wearable device 101 and the external object 520 is equal to or greater than the threshold 741, the wearable device 101 may not display the virtual object 720 corresponding to the external object 520.

In FIGS. 5 to 9, an example of determining whether to display a virtual object corresponding to the external object 520 based on the distance between the wearable device 101 and the external object 520 has been described. If the external object 520 is located between the virtual region 580 and the user 105 (or the wearable device 101), since the external object 520 affects a sense of perspective of the user 105, the wearable device 101 is required to obtain a distance to the external object 520. Meanwhile, even if external objects are spaced apart from the wearable device 101 by the same distance, effects on the sense of perspective of the user 105 may be different. For example, assume a first external object and a second external object. A size of the first external object may be larger than a size of the second external object. The first external object may occupy a larger space in a field-of-view of the user 105 than the second external object. Accordingly, an effect of the first external object on the sense of perspective may be greater than an effect of the second external object on the sense of perspective. In order to indicate this influence difference, the wearable device 101 according to embodiments of the present disclosure may set a weight value for an external object. The wearable device 101 may determine whether to display the virtual object based on whether the weight value of the external object exceeds a threshold. In a case that the weight value of the external object exceeds the threshold, the wearable device 101 may display the virtual object.

According to an embodiment, the wearable device 101 may set a weight value for the external object 520 based on the distance between the wearable device 101 and the external object 520. As the external object 520 becomes closer to the wearable device 101, the weight of the external object 520 may be set to be higher. As the external object 520 becomes farther from the wearable device 101, the weight of the external object 520 may be set to be lower.

According to an embodiment, the wearable device 101 may set the weight value for the external object 520 based on a size of the external object 520. As the size of the external object 520 increases, the weight of the external object 520 may be set to be higher. As the size of the external object 520 decreases, the weight of the external object 520 may be set to be lower.

According to an embodiment, the wearable device 101 may set the weight value for the external object 520 based on speed information of the external object 520. As the speed information of the external object 520 increases, the weight of the external object 520 may be set to be higher. As the external object 520 moves faster, the weight of the external object 520 may be set to be higher. As speed of the external object 520 decreases, the weight of the external object 520 may be set to be lower.

According to an embodiment, the wearable device 101 may set the weight value for the external object 520 based on color information of the external object 520. For example, as the external object 520 includes more components of a specified color (e.g., red), the weight of the external object 520 may be set to be higher. For example, as a saturation of a color of the external object 520 increases, the weight of the external object 520 may be set to be higher.

According to an embodiment, the wearable device 101 may set the weight value for the external object 520 based on a direction of a gaze of the user 105. The wearable device 101 may obtain the direction of the gaze of the user 105. The wearable device 101 may obtain information on a distance to which the external object 520 is separated based on the direction of the gaze. The wearable device 101 may set the weight value for the external object 520 based on the information. For example, as the external object 520 becomes closer to the direction of the gaze, the weight may be set to be higher. For example, as the external object 520 becomes farther from the direction of the gaze, the weight of the external object 520 may be set to be higher.

In order to determine a visual influence of an external object on the user 105, the wearable device 101 may determine a weight for the external object based on at least one condition among the above-described conditions. According to an embodiment, the wearable device 101 may determine the weight for the external object through a combination of the above-described conditions. For example, the wearable device 101 may set the weight value for the external object 520 based on the color information and the speed information. For example, the wearable device 101 may set the weight value for the external object 520 based on the distance between the external object 520 and the wearable device 101 and the speed information of the external object 520. As an example, the weight value of the distant and fixed external object 520 may be set to be smaller than the weight value of the moving external object 520. Embodiments of the present disclosure are not to be interpreted as being limited to the above-described conditions. If it is a condition that may affect vision of the user 105, the condition may be used to determine the weight value. The above condition may be used instead of the above-described conditions, or may be combined with at least one of the above-described conditions.

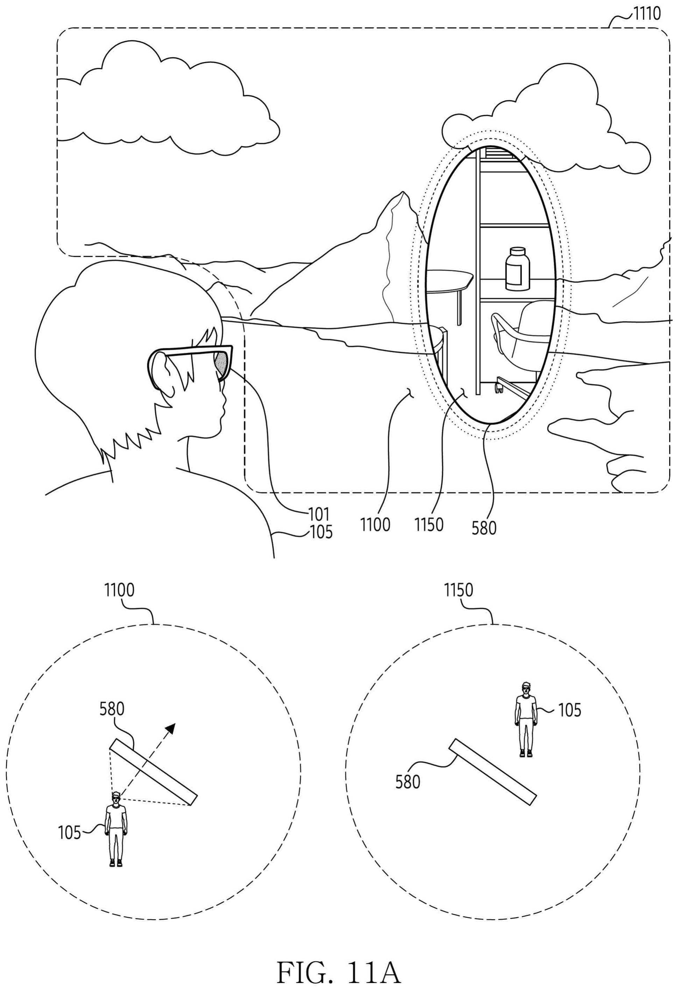

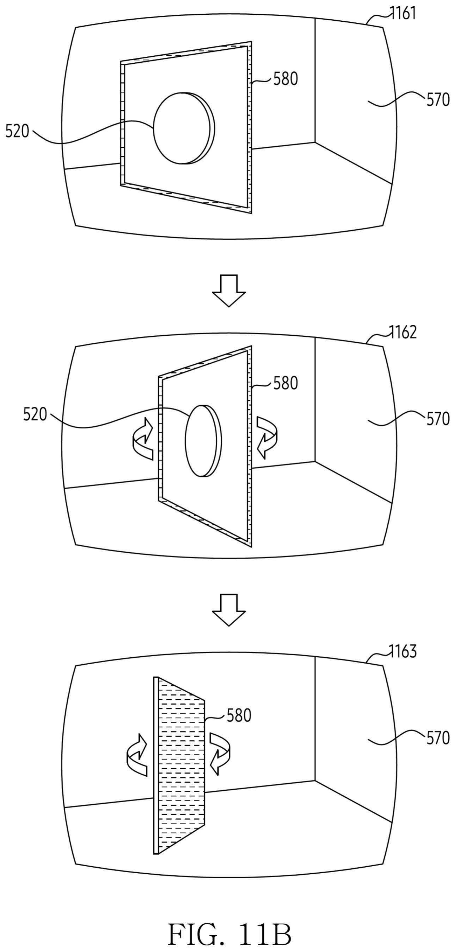

FIGS. 11A and 11B illustrate examples of a pass-through surface. A wearable device 101 may perform a pass-through operation. For example, the wearable device 101 may drive a camera (e.g., the camera 425 of FIG. 4) based on a user input. The wearable device 101 may obtain an image through the camera 425. The wearable device 101 may include a virtual region 580 for indicating at least a portion of the image. The virtual region 580 may be referred to as a pass-through surface.

Referring to FIG. 11A, according to an embodiment, the virtual region 580 may be used for transition between a virtual environment (e.g., a virtual environment 1100) and a real environment (e.g., a real environment 1150). The wearable device 101 may display, through the virtual region 580, an image indicating at least a portion of the real environment 1050. A user 105 of the wearable device 101 may move. For example, the user 105 of the wearable device 101 may move close to the virtual region 580. The user 105 of the wearable device 101 may pass through the virtual region 580. If the wearable device 101 detects that the user 105 moves across a region corresponding to the virtual region 580 on a virtual space, the wearable device 101 may obtain, through the camera 425, an image corresponding to the real environment 1150. The image corresponding to the real environment 1150 may be displayed through a display 420. While displaying the image corresponding to the real environment 1150, the wearable device 101 may display, through the virtual region 580, an image indicating at least a portion of the virtual environment 1100.

Referring to FIG. 11B, according to an embodiment, the virtual region 580 may be formed in a form of a stencil in a virtual environment. For example, the user 105 of the wearable device 101 may move around the virtual region 580. The wearable device 101 may move counterclockwise centered on the virtual region 580. The wearable device 101 may display a screen corresponding to a position of the user 105. For example, the wearable device 101 may sequentially display a first screen 1161, a second screen 1162, and a third screen 1163. As displayed through the first screen 1161, the second screen 1162, and the third screen 1163, the virtual region 580 may be disposed at a fixed position in the virtual environment. A shape of the virtual region 580 may be a disk.

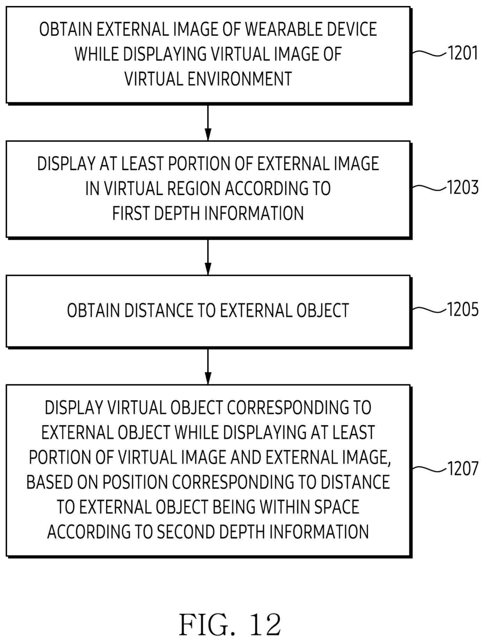

FIG. 12 illustrates an operation flow of a wearable device (e.g., the wearable device 101 of FIG. 1) for displaying a virtual object on an external image (e.g., the external image 575 of FIG. 5).

Referring to FIG. 12, in operation 1201, the wearable device 101 may obtain an external image (e.g., the external image 575 of FIG. 5) of the wearable device 101 while displaying a virtual image (e.g., the virtual image 570 of FIG. 5) of a virtual environment. The external image 575 may indicate at least a portion of a surrounding real environment. The wearable device 101 may perform a pass-through operation. The wearable device 101 may provide the virtual environment. The wearable device 101 may drive a camera (e.g., the camera 425 of FIG. 4) to indicate an image corresponding to the real environment while the virtual image 570 is displayed. The wearable device 101 may obtain the external image 575 by capturing at least a portion of the real environment through the camera 425.

In operation 1203, the wearable device 101 may display at least a portion of the external image 575 in a virtual region (e.g., the virtual region 580 of FIG. 5) according to first depth information (e.g., the first depth information 641 of FIG. 6). The first depth information 641 may indicate a distance from a user 105 of the wearable device 101 to the virtual region 580. Through a VST function of the wearable device 101, the virtual region 580 may indicate a space in which the external image 575, which is a real image captured by the camera 425, is displayed on the virtual image 570 corresponding to a virtual space. The wearable device 101 may display, at a position corresponding to the first depth information 641, the virtual region 580 for the pass-through operation. When the user views the virtual region 580, the wearable device 101 may display at least a portion of the external image 575 so that at least a portion of the real environment is exposed in the virtual region 580. While the virtual image 570 is displayed, the wearable device 101 may display the external image 575 through the virtual region 580.

In operation 1205, the wearable device 101 may obtain a distance to an external object (e.g., the external object 520 of FIG. 5). For example, the external image 575 may include the external object 520. The wearable device 101 may obtain, through at least one sensor (e.g., the sensor 430 of FIG. 4), the distance between the external object 520 and the wearable device 101. For example, the at least one sensor may include a depth sensor and/or a time of flight (ToF) sensor.

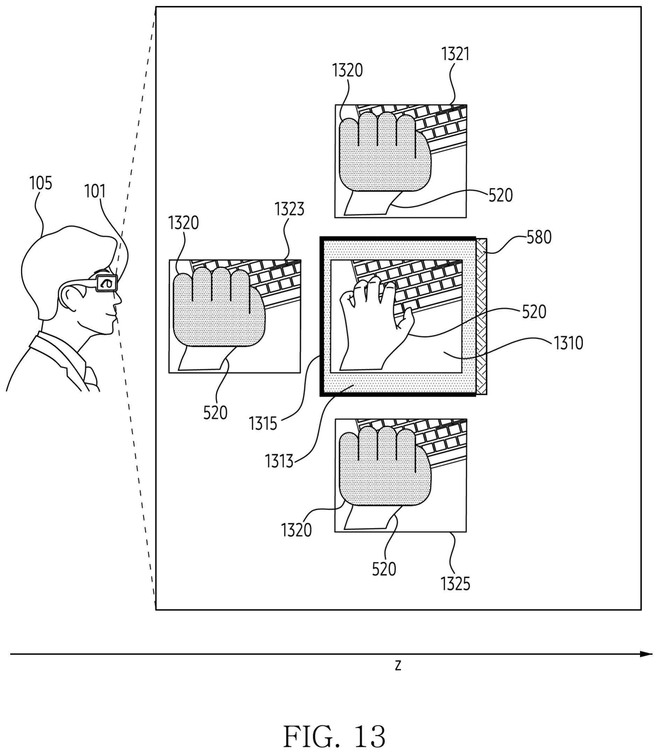

In operation 1207, the wearable device 101 may display a virtual object (e.g., the virtual object 720 of FIG. 7) corresponding to the external object 520 while displaying at least a portion of the virtual image 570 and the external image 575, based on a position corresponding to the distance to the external object 520 being within a space according to second depth information (e.g., the threshold 741 of FIG. 7). According to an embodiment, the wearable device 101 may determine a distance according to the second depth information. The second depth information may indicate a depth (e.g., a z-index) of a region that is a reference for determining whether to display the virtual object 720. The region may be referred to as a boundary region 780. The wearable device 101 may determine whether the distance between the wearable device 101 and the external object 520 is closer than the distance according to the second depth information, that is, a distance indicated by the threshold 741. If the distance between the wearable device 101 and the external object 520 is shorter than the distance indicated by the threshold 741, the wearable device 101 may determine that a position of the external object 520 is within the space according to the second depth information (e.g., the threshold 741 of FIG. 7). In order to alleviate distortion in distance recognition of the user 105, the wearable device 101 may display the virtual object 720 corresponding to the external object 520. Meanwhile, as illustrated in FIGS. 13 to 15 described below, even if a boundary region is a three-dimensional figure having a volume in a three-dimensional space, the wearable device 101 may set a boundary surface (e.g., which may be displayed in a three-dimensional space according to a surf() function) of the three-dimensional figure as the boundary region. For example, the second depth information may indicate a distance between each point of the boundary surface of the three-dimensional figure and the wearable device 101. The wearable device 101 may determine a distance between the boundary surface of the three-dimensional figure and the wearable device 101 based on a direction of the external object 520 from the wearable device 101. If the distance between the wearable device 101 and the external object 520 is shorter than the distance between the boundary surface of the three-dimensional figure and the wearable device 101, the wearable device 101 may determine that the position of the external object 520 is within the space according to the second depth information. The wearable device 101 may display the virtual object 720 while displaying at least the portion of the virtual image 570 and the external image 575. The virtual object 720 may be displayed at least partially superimposed on the external image 575. For example, the wearable device 101 may display the virtual object 720 so that the virtual object 720 is superimposed on a region with respect to the external object 520 of the external image 575.

In FIGS. 5 to 13, in order to display a virtual object corresponding to an external object, the virtual region 580 corresponding to the first depth information 641 and the boundary region 780 corresponding to the threshold 741 were defined. Regions (e.g., the first region 731, the second region 732, and the third region 733 of FIG. 7) may be classified through the distance between the external object 520 and the wearable device 101, the virtual region 580, and the boundary region 780. The regions may be distinguished according to how far they are separated based on the user 105. Meanwhile, in FIG. 7, the boundary region 780 corresponding to the threshold 741 is illustrated as being a surface (e.g., a xy plane) perpendicular to a direction (e.g., a z-axis), but embodiments of the present disclosure are not limited thereto. The boundary region 780 as a reference for determining whether to display the virtual object 720 may be defined as a certain space other than simply a surface. In the present disclosure, a boundary region (e.g., the boundary region 780 of FIG. 7 or a boundary region 1315 of FIG. 13) may be referred to, in addition to the boundary region, as a display region, a display boundary region, a display surface, a boundary side, a display space, a boundary space, a boundary surface, an object display boundary, or a term having a technical meaning equivalent thereto. Hereinafter, in FIGS. 13 to 15, a virtual region occupying a space in a virtual space is described.

FIG. 13 illustrates an example of a boundary region for displaying a virtual object (e.g., the virtual object 720 of FIG. 7). A method of displaying an external object (e.g., the external object 520 of FIG. 5) in a virtual space may include, through a virtual region (e.g., the virtual region 580 of FIG. 5), a method of displaying an external object 520 captured according to a pass-through operation or a method of displaying a virtual object corresponding to the external object 520. In FIG. 13, an example of displaying the virtual object corresponding to the external object 520 or displaying an external image (e.g., the external image 575 of FIG. 5) without displaying the virtual object is described according to a position of the external object 520.

Referring to FIG. 13, a wearable device 101 may obtain the position of the external object 520. The wearable device 101 may determine whether to display a virtual object 1320 corresponding to the external object 520 based on the position of the external object 520. For description of the virtual object 1320, a virtual object (e.g., 720 of FIG. 7) may be referenced. Even if the boundary region is a three-dimensional figure having a volume in a three-dimensional space, the wearable device 101 may set a boundary surface of the three-dimensional figure as a boundary region 1315. A distance between each point of the boundary region 1315 and the wearable device 101 may be referred to as second depth information. For example, the wearable device 101 may determine a virtual distance between the boundary surface of the three-dimensional figure and the wearable device 101 based on a direction of the external object 520 from the wearable device 101. If a real distance between the wearable device 101 and the external object 520 is shorter than the virtual distance, the wearable device 101 may determine that the external object 520 is located in the boundary region 1315. The external object 520 located in the boundary region 1315 may be within a space according to the second depth information. The wearable device 101 may set the three-dimensional boundary region 1315 based on the virtual region 580 as a boundary for distinguishing a real environment and a virtual environment. The wearable device 101 may display the virtual object 1320 corresponding to the external object 520 for the external object 520 located in the boundary region 1315. The wearable device 101 may display an external image including the external object 520 for the external object 520 located outside the boundary region 1315.

The wearable device 101 may set the boundary region 1315 having a volume in a three-dimensional space 1313. The space 1313 may be formed between the boundary region 1315 and the virtual region 580. For example, in a case that the position of the external object 520 is included inside the space 1313, the wearable device 101 may display an external image through the space 1313 and/or the virtual region 580 instead of displaying the virtual object 1320 corresponding to the external object 520. For example, if the position of the external object 520 is outside the space 1313, the wearable device 101 may display the virtual object 1320 corresponding to the external object 520. If it is an external space of a three-dimensional figure occupied through the boundary region 1315 and the virtual region 580, the wearable device 101 may display the virtual object 1320. For example, even if the external object 520 exists at a position (e.g., a first position 1321 or a third position 1325) that has a value greater than a value of a z-axis of a portion of the boundary region 1315, the wearable device 101 may display the virtual object 1320 while displaying the external image. For example, since the first position 1321 or the third position 1325 is outside the space 1313, the virtual object 1320 corresponding to the external object 520 may be displayed. For example, if the position (e.g., a second position 1323) of the external object 520 is closer to a user 105 than to a position of a portion of the boundary region 1315, the wearable device 101 may display the virtual object 1320 while displaying the external image.

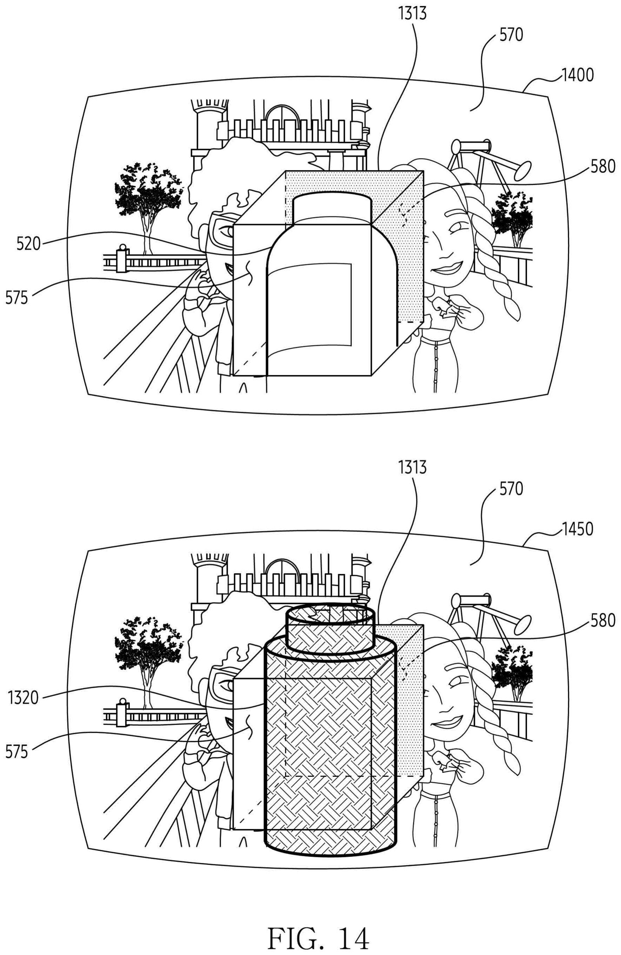

FIG. 14 illustrates an example of a boundary region (e.g., the boundary region 1315 of FIG. 13) and a virtual environment for displaying a virtual object. A virtual space 1313 may be formed through the boundary region 1315 and a virtual region (e.g., the virtual region 580 of FIG. 5).

Referring to FIG. 14, a wearable device 101 may display a screen 1400 through a display (e.g., the display 420 of FIG. 4). The screen 1400 may include a virtual image 570 and an external image 575. The external image 575 may be displayed through the virtual space 1313. While displaying the virtual image 570, the wearable device 101 may display the virtual space 1313. The wearable device 101 may display the external image 575 through the virtual space 1313. The external image may include an external object 520. For example, the wearable device 101 may obtain information on a distance to the external object 520 and information on a direction to the external object 520. The wearable device 101 may determine a position of the external object 520 based on the information on the distance to the external object 520 and the information on the direction to the external object 520. The wearable device 101 may determine the position of the external object 520 in a virtual environment based on a user 105. For example, if the determined position of the external object 520 is outside the virtual space 1313, the wearable device 101 may display a virtual object 1320 corresponding to the external object 520. Meanwhile, unlike as illustrated in FIG. 13, if the determined position of the external object 520 is within the virtual space 1313, the wearable device 101 may display the external object 520 without the virtual object 1320 corresponding to the external object 520.

The wearable device 101 may display a screen 1450 through the display 420. The screen 1450 may include the virtual image 570, the external image 575, and the virtual object 1320. The external image 575 may be displayed through the virtual space 1313. While displaying the virtual image 570, the wearable device 101 may display the virtual space 1313. The wearable device 101 may display the external image 575 through the virtual space 1313. The external image may include the external object 520. For example, the wearable device 101 may determine the position of the external object 520 based on the information on the distance to the external object 520 and the information on the direction to the external object 520. The wearable device 101 may determine the position of the external object 520 in the virtual environment based on the user 105. For example, if the determined position of the external object 520 is outside the virtual space 1313, the wearable device 101 may display the virtual object 1320 corresponding to the external object 520.

Although, in FIG. 14, a surface of the virtual space 1313 is illustrated as corresponding to the virtual region 580, embodiments of the present disclosure are not limited thereto. The virtual space 1313 may be formed only with a space covered by the boundary region 1315, without a surface such as the virtual region 580.

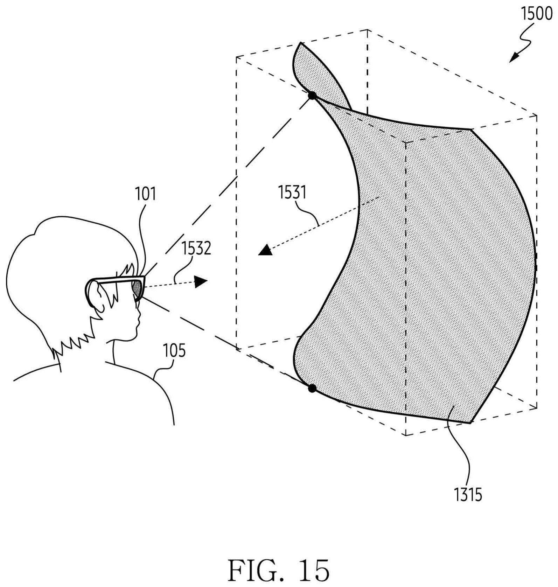

FIG. 15 illustrates an example 1500 of a boundary region of a curved surface.

Referring to FIG. 15, a wearable device 101 may include a boundary region 1315 of a curved surface. According to an embodiment, the wearable device 101 may set the boundary region 1315 forming the curved surface in a three-dimensional space of a virtual environment. If a position of an external object (e.g., an external object 520) is closer to a user 101 than the boundary region 1315, the wearable device 101 may display a virtual object (e.g., the virtual object 1320) corresponding to the external object 520. For example, the wearable device 101 may display a virtual object corresponding to a hand superimposed on an external image.

The boundary region 1315 as a target for comparison with a distance between the user 105 and the wearable device 101 may be determined according to various references. According to an embodiment, the boundary region 1315 may be determined in a virtual space based on a distance between the wearable device 101 and a virtual region 580. For example, as the distance between the wearable device 101 and the virtual region 580 becomes closer, the boundary region 1315 may be formed in a narrow area. This is because the area of the boundary region 1315 becomes narrower, so a possibility that a virtual object is displayed becomes higher. According to an embodiment, in a real environment, the boundary region 1315 may be determined based on the distance between the wearable device 101 and the virtual region 580. For example, as the distance between the wearable device 101 and the virtual region 580 becomes closer, the boundary region 1315 may be formed in the narrow area. According to an embodiment, the boundary region 1315 may be determined based on an angle formed by a normal vector 1531 of the virtual region 580 with a viewing direction 1532 of the user 105. For example, as the angle becomes narrower, the boundary region 1315 may be formed in the narrow area. According to an embodiment, the boundary region 1315 may be determined based on a threshold of a weight set for the external object 520. According to an embodiment, the boundary region 1315 may be determined based on a value (e.g., a customizing variable) specified according to a user input. In addition, as a nonlimiting example, the boundary region 1315 may be determined through a combination of the above-described elements.

In embodiments, an electronic device 101 is provided. The electronic device 101 may comprise a display 420, at least one sensor 430, memory 415 storing instructions, and at least one processor 410. The instructions, when executed by the at least one processor 410, may cause the electronic device 101 to obtain an external image of the electronic device 101 while displaying, through the display 420, a virtual image of a virtual environment, display, through the display 420, at least a portion of the external image on a virtual region according to first depth information in the virtual environment while displaying the virtual image, obtain, through the at least one sensor 430, a distance to an external object included in at least the portion of the external image, and display a virtual object corresponding to the external object through the display 420 while displaying the virtual image and at least the portion of the external image, based on a position corresponding to the distance to the external object being within a space according to second depth information.

According to an embodiment, the instructions, when executed by the at least one processor 410, may cause the electronic device 101 to identify whether a distance corresponding to the first depth information is equal to or greater than a first threshold, and in a case that the distance corresponding to the first depth information is equal to or greater than the first threshold, display the virtual object corresponding to the external object through the display 420 while displaying the virtual image and at least the portion of the external image.

According to an embodiment, the instructions, when executed by the at least one processor 410, may cause the electronic device 101 to identify whether a normal vector of the virtual region is within a threshold distance from a viewing direction, and in a case that the normal vector of the virtual region is within the threshold distance from the viewing direction, display the virtual object corresponding to the external object through the display 420 while displaying the virtual image and at least the portion of the external image.

According to an embodiment, the instructions, when executed by the at least one processor 410, may cause the electronic device 101 to identify whether an area of the virtual region is equal to or greater than a second threshold, and in a case that the area of the virtual region is equal to or greater than the second threshold, display the virtual object corresponding to the external object through the display 420 while displaying the virtual image and at least the portion of the external image.

According to an embodiment, the first depth information indicates a distance between a reference position and the virtual region in the virtual environment. The second depth information may indicate a distance between the reference position and a display boundary region in the virtual environment. The display boundary region may be used to identify whether to display the virtual object.

According to an embodiment, a space between the virtual region and the display boundary region may indicate a three-dimensional volume in the virtual environment. The second depth information for the display boundary region may indicate a plurality of depth values from the reference position.

According to an embodiment, the instructions, when executed by the at least one processor 410, may cause the electronic device 101 to obtain a weight of the external object based on at least one of a size of the external object, a distance to the external object, speed information of the external object, or color information of the external object, in a case that the weight of the external object is equal to or greater than an object threshold, display the virtual object corresponding to the external object through the display 420 while displaying the virtual image and at least the portion of the external image, and in a case that the weight of the external object is less than the object threshold, display the virtual image and the external image through the display 420 without displaying the virtual object.

According to an embodiment, when the size of the external object is a first size, the weight may be a first value. When the size of the external object is a second size greater than the first size, the weight may be a second value. The second value may be greater than the first value.

According to an embodiment, when the speed information of the external object is a first speed value, the weight may be a first value. When the speed information of the external object is a second speed value greater than the first speed value, the weight may be a second value. The second value may be greater than the first value.

According to an embodiment, the instructions, when executed by the at least one processor 410, may cause the electronic device 101 to display the virtual image and the external image through the display 420 without displaying the virtual object, in a case that the distance to the external object is outside a second distance.

According to an embodiment, the virtual object may be displayed superimposed on the external image according to depth information determined based on the distance to the external object.

According to an embodiment, the instructions, when executed by the at least one processor 410, may cause the electronic device 101 to obtain a plurality of positions corresponding to the external object in the virtual environment, generate a second virtual object corresponding to the external object, in a case that at least some of the plurality of positions corresponding to the external object are positions corresponding to the second depth information, and display the generated second virtual object through the display 420 while displaying the virtual image and at least the portion of the external image. An opacity of the second virtual object may be greater than an opacity of the virtual object.

According to an embodiment, the at least one sensor 430 may include a depth sensor.

According to an embodiment, the second depth information may indicate a distance that is closer to a reference position of the virtual environment than a distance corresponding to the first depth information.

According to an embodiment, the instructions, when executed by the at least one processor, may cause the electronic device to cease displaying the virtual object, in a case that position information of the external object is outside the space according to the second depth information and is located between the first depth information and the second depth information.

In embodiments, an electronic device 101 is provided. The electronic device 101 may comprise a display 420, at least one sensor 430, memory 415 storing instructions, and at least one processor 410. The instructions, when executed by the at least one processor 410, may cause the electronic device 101 to obtain an external image of the electronic device 101 while displaying, through the display 420, a virtual image of a virtual environment, display, through the display 420, at least a portion of the external image on a virtual region according to first depth information in the virtual environment while displaying the virtual image, obtain position information of the external object based on a distance to the external object obtained through the at least one sensor 430, display, through the display 420, a virtual object corresponding to the external object while displaying the virtual image and at least the portion of the external image, in a case that the position information of the external object is within a space according to second depth information, and cease displaying the virtual object, in a case that the position information of the external object is outside the space according to the second depth information and is located between the first depth information and the second depth information. The second depth information may indicate a distance that is closer to a reference position of the virtual environment than a distance corresponding to the first depth information.

According to an embodiment, the instructions, when executed by the at least one processor 410, may cause the electronic device 101 to obtain speed information of the external object through the at least one sensor 430, and generate the virtual object corresponding to the external object based on the speed information of the external object less than a speed threshold.

According to an embodiment, the instructions, when executed by the at least one processor 410, may cause the electronic device 101 to identify whether a distance corresponding to the first depth information is equal to or greater than a first threshold, and in a case that the distance corresponding to the first depth information is equal to or greater than the first threshold, generate the virtual object corresponding to the external object while displaying the virtual image and at least the portion of the external image.

According to an embodiment, the instructions, when executed by the at least one processor 410, may cause the electronic device 101 to identify whether a normal vector of the virtual region is within a threshold distance from a viewing direction, and in a case that the normal vector of the virtual region is within the threshold distance from the viewing direction, generate the virtual object corresponding to the external object while displaying the virtual image and at least the portion of the external image.

According to an embodiment, the instructions, when executed by the at least one processor 410, may cause the electronic device 101 to identify whether an area of the virtual region is equal to or greater than a second threshold, and in a case that the area of the virtual region is equal to or greater than the second threshold, generate the virtual object corresponding to the external object while displaying the virtual image and at least the portion of the external image.

According to an embodiment, the first depth information indicates a distance between a reference position and the virtual region in the virtual environment. The second depth information may indicate a distance between the reference position and a display boundary region in the virtual environment. The display boundary region may be used to identify whether to display the virtual object.

In embodiments, a non-transitory computer-readable medium is provided. The non-transitory computer-readable medium may comprise memory storing instructions. The instructions, when executed by at least one processor 410, may cause an electronic device 101 to obtain an external image of the electronic device 101 while displaying, through a display 420, a virtual image of a virtual environment, display, through the display 420, at least a portion of the external image on a virtual region according to first depth information in the virtual environment while displaying the virtual image, obtain, through at least one sensor 430, a distance to an external object included in at least the portion of the external image, and display a virtual object corresponding to the external object through the display 420 while displaying the virtual image and at least the portion of the external image, based on a position corresponding to the distance to the external object being within a space according to second depth information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
at least one sensor;
memory storing instructions; and
at least one processor,
wherein the instructions, when executed by the at least one processor, cause the electronic device to:
obtain an external image of the electronic device while displaying, through the display, a virtual image of a virtual environment;
display, through the display, at least a portion of the external image on a virtual region according to first depth information in the virtual environment while displaying the virtual image;
obtain, through the at least one sensor, a distance to an external object included in at least the portion of the external image; and
display a virtual object corresponding to the external object through the display while displaying the virtual image and at least the portion of the external image, based on a position corresponding to the distance to the external object being within a space according to second depth information.

2. The electronic device of claim 1,
wherein the instructions, when executed by the at least one processor, cause the electronic device to:
identify whether a distance corresponding to the first depth information is equal to or greater than a first threshold; and
in a case that the distance corresponding to the first depth information is equal to or greater than the first threshold, display the virtual object corresponding to the external object through the display while displaying the virtual image and at least the portion of the external image.

3. The electronic device of claim 1,
wherein the instructions, when executed by the at least one processor, cause the electronic device to:
identify whether a normal vector of the virtual region is within a threshold distance from a viewing direction; and
in a case that the normal vector of the virtual region is within the threshold distance from the viewing direction, display the virtual object corresponding to the external object through the display while displaying the virtual image and at least the portion of the external image.

4. The electronic device of claim 1,
wherein the instructions, when executed by the at least one processor, cause the electronic device to:
identify whether an area of the virtual region is equal to or greater than a second threshold; and
in a case that the area of the virtual region is equal to or greater than the second threshold, display the virtual object corresponding to the external object through the display while displaying the virtual image and at least the portion of the external image.

5. The electronic device of claim **1,**
wherein the first depth information indicates a distance between a reference position and the virtual region in the virtual environment,
wherein the second depth information indicates a distance between the reference position and a display boundary region in the virtual environment, and
wherein the display boundary region is used to identify whether to display the virtual object.

6. The electronic device of claim 5,
wherein a space between the virtual region and the display boundary region represents a three-dimensional volume in the virtual environment, and
wherein the second depth information for the display boundary region represents a plurality of depth values from the reference position.

7. The electronic device of claim **1,**
wherein the instructions, when executed by the at least one processor, cause the electronic device to:
obtain a weight of the external object based on at least one of a size of the external object, a distance to the external object, speed information of the external object, or color information of the external object;
in a case that the weight of the external object is equal to or greater than an object threshold, display the virtual object corresponding to the external object through the display while displaying the virtual image and at least the portion of the external image; and
in a case that the weight of the external object is less than the object threshold, display the virtual image and the external image through the display without displaying the virtual object.

8. The electronic device of claim 7,
wherein, when the size of the external object is a first size, the weight is a first value,
wherein, when the size of the external object is a second size greater than the first size, the weight is a second value, and
wherein the second value is greater than the first value.

9. The electronic device of claim 7,
wherein, when the speed information of the external object is a first speed value, the weight is a first value,
wherein, when the speed information of the external object is a second speed value greater than the first speed value, the weight is a second value, and
wherein the second value is greater than the first value.

10. The electronic device of claim 1,
wherein the instructions, when executed by the at least one processor, cause the electronic device to:
display the virtual image and the external image through the display without displaying the virtual object, in a case that the distance to the external object is outside a second distance.

11. The electronic device of claim 1,
wherein the virtual object is displayed superimposed on the external image according to depth information determined based on the distance to the external object.

12. The electronic device of claim 1,
wherein the instructions, when executed by the at least one processor, cause the electronic device to:
obtain a plurality of positions corresponding to the external object in the virtual environment;
generate a second virtual object corresponding to the external object, in a case that at least some of the plurality of positions corresponding to the external object are positions corresponding to the second depth information;
display the generated second virtual object through the display while displaying the virtual image and at least the portion of the external image, and
wherein an opacity of the second virtual object is greater than an opacity of the virtual object.

13. The electronic device of claim 1,
wherein the second depth information indicates a distance that is closer to a reference position of the virtual environment than a distance corresponding to the first depth information.

14. The electronic device of claim 1,
wherein the instructions, when executed by the at least one processor, cause the electronic device to:
cease displaying the virtual object, in a case that position information of the external object is outside the space according to the second depth information and is located between the first depth information and the second depth information.

15. A non-transitory computer-readable medium comprising memory storing instructions,
wherein the instructions, when executed by at least one processor, cause an electronic device to:
obtain an external image of the electronic device while displaying, through a display, a virtual image of a virtual environment;
display, through the display, at least a portion of the external image on a virtual region according to first depth information in the virtual environment while displaying the virtual image;
obtain, through at least one sensor, a distance to an external object included in at least the portion of the external image; and
display a virtual object corresponding to the external object through the display while displaying the virtual image and at least the portion of the external image, based on a position corresponding to the distance to the external object being within a space according to second depth information.
